# EUROPEAN PATENT APPLICATION

(11) **EP 2 660 760 A1**
(43) Date of publication of application: **06.11.2013**
(21) Application number: 12180331.6
(22) Date of filing: 13.08.2012
(51) Int. Cl.: G06Q 10/10

(54) **Electronic device and method for classification of communication data objects**

(30) Priority: 01.05.2012 US 201213461491
(71) Applicant: BlackBerry Limited, Waterloo, ON N2L 3W8 (CA)
(72) Inventor: Sutedja, Darsono, Andover, MA 01810 (US); Miglani, Umesh, Andover, MA 01810 (US); Damodaran, Prakash, Andover, MA 01810 (US); Nadaf, Imtiaz, Andover, MA 01810 (US); Castagnozzi, Francis, Andover, MA 01810 (US)
(74) Representative: Moore, Barry

(57) **Abstract**

A method, system and electronic device are provided for classification of data objects such as messages. A number of rule engines, each of which may be ssociated with a different application or module, are provided on the electronic device. For each data object obtained by the electronic device, matching rule engines are identified, and the data object is processed by the matching rule engines to determine one or more classification values for the data object. The determined classification is stored in association with a data object identifier. Data objects can be subsequently collated according to their classification, or aggregations of data object listings can be collected and displayed in a plurality of views correpsonding to the various classifications.

## Description

### Technical Field

The present disclosure relates to automated classification and filtering of data objects including communication-related data objects at an electronic device.

### Technical Background

A messaging client application executing on an electronic device typically presents messages and related data objects to the user in one or more listings, collated according to one or more criteria based on message metadata (for example, ordered in reverse chronological order based on message timestamp). Presentation can be made visually via a display screen, or by other user-perceptible means such as audible announcements. Messages stored and available for presentation at the electronic device can include both received and sent messages, and can be associated with a variety of different messaging accounts, and can have different commonly known and used formats such as email, SMS (short message service), IM (instant messages, either server-based or peer-to-peer), and the like, as well as variants thereof and proprietary formats. Multiple message types can be presented in a unified message listing, which can, as the name suggests, provide a unified view of all messages received at (and optionally sent from) the electronic device, or accounts provisioned on the electronic device.

Given the potential number of messages available for presentation via a unified message listing or other user interface, the presentation of messages in a single user interface (such as a display screen) may be cluttered, and it can be difficult for the user to locate those messages of particular interest at a given time. Accordingly, a filter can be employed to screen out those messages that are not of interest to reduce the numbers and types of messages that are presented to the user at a given time. On a user electronic device, particularly a mobile electronic device, the filter typically operates on specific message attributes (e.g., a specified sender name, a specific word in the message subject line) that are inherent in the message when it arrives at the electronic device.

### Brief Description of the Drawings

In drawings which illustrate by way of example only embodiments of the present disclosure, in which like reference numerals describe similar items throughout the various figures,

FIG. 1 is a block diagram of an example of an electronic device.

FIG. 2 is a schematic diagram of select components of the electronic device of FIG. 1 including a classification manager and rule engine repository.

FIG. 3 is flowchart illustrating a method of providing a rule engine to the rule engine repository of FIG. 2.

FIG. 4 is a schematic diagram illustrating communication flow between components of FIG. 2.

FIG. 5 is a schematic diagram of a classification system, including the classification manager and rule engine repository, in relation to other components of the electronic device.

FIGS. 6 and 7 are flowcharts illustrating a method of classifying a data object using the system of FIG. 5.

FIG. 8 is a schematic diagram illustrating communication flow between components of FIG. 5.

FIG. 9 is an illustration of an example graphical user interface for configuring classification rules for use with the system of FIG. 5.

FIGS. 10A to 10C are illustrations of further example graphical user interfaces for configuring classification rules.

FIG. 11 is an illustration of still a further example graphical user interface for configuring classification rules within a messaging application.

FIG. 12 is a schematic diagram showing a further view of the classification system and a view manager in relation to other components of the electronic device.

FIG. 13 is a schematic diagram illustrating the view manager in relation to individual views or screens for display at the electronic device.

FIG. 14 is a flowchart illustrating a method of updating a view based on a new or changed classification of a data object.

FIGS. 15A to 15E are illustrations of graphical user interfaces presenting views as they may be displayed on the electronic device.

### Detailed Description of the Invention

A single electronic device may be provisioned for single or multiple messaging accounts employing one or more different messaging formats, which can include email, IM, SMS, MMS (multimedia messaging service), voicemail, VVM, and the like, as well as variants thereof and proprietary electronic message formats. Messages in one or more of these formats may be composed at and transmitted from the electronic device; messages may also be received at the electronic device over a network connection. These messages are typically stored in non-volatile storage at the electronic device, either in a single data store or, as is more likely, in multiple data stores corresponding to the different messaging applications or messaging formats provisioned on the device. Each message item that is received or generated at the device can be stored as a separate communication or data object, and can be retrieved for presentation at the electronic device through a corresponding messaging application executing at the device. In addition, the data objects can be indexed for retrieval on the device either through the corresponding application itself, or through a unified search or unified inbox application implemented on the electronic device.

An example of this latter type of application is a "unified inbox" or "unified message box", which is configured to present to the user a message listing display that can be considered to be a global message or content list. For clarity, the term "unified inbox", unless stated otherwise, is intended to be inclusive of an application providing message listings that can include references not only to received messages, but also to "sent" messages originating and/or transmitted from the same electronic device, drafts, and other messages that are not received at the device or stored in received message folder or inbox data store. The unified inbox thus provides a unified view of message information that serves as an entry point for access to individual messaging services or individual messaging applications associated with each of the message types included in the unified inbox. The message or content elements displayed in the unified inbox display may include, in the case of messages such as e-mail, header data such as sender, timestamp, and subject line. In addition, or alternatively, at least a portion of the message body content may also be displayed an individual listing entry in the unified inbox. In the case of other message types, such as instant messages, the information displayed may include message body content in place of message header content.

When a message arrives at the electronic device, or when a new message is created at the electronic device, the message is stored in the appropriate message data store for later retrieval. Heavy reliance on electronic communications, and on mobile communication devices in general, can result in large collections of data-and large collections of messages of different types-being stored on a user's mobile communication device. Given the potential number of messages available for presentation via a unified inbox view or other message listing, the presentation of messages in a single user interface (such as a display screen) may be cluttered, and it can be difficult for the user to locate those messages of particular interest at a given time. Accordingly, a search or filtering function can be employed to identify those messages that are of particular interest (or not of particular interest) to the user at a given time.

A search based on specified criteria may be executed against each relevant message data store to identify messages having characteristics matching the specified criteria. Those messages matching the specified criteria are then used to populate a resultant list of matching messages which is then displayed to the user in a search results view. However, searches are typically executed on an "ad hoc" basis, and the search results view is typically lost when the view is closed (e.g., when the window or screen displaying the list of matching messages is dismissed). Furthermore, a search is typically executed against the entire relevant message data store; thus, each time a search is conducted for messages matching the specified criteria, consumption of processing resources may increase significantly as the search algorithm is applied to the existing message data stores, particularly when there are multiple repositories of message data objects (as in the case where multiple messaging accounts are provisioned on the electronic device).

Alternatively, when messages are received and/or stored at the device, they are processed by a messaging application according to filter or rule criteria specified in the messaging application, and a filtered list of messages (referenced by message identifier) is built. Examples of filtering in this manner are set out in U.S. Patent No. 7,568,011 issued 28 July 2009, and in U.S. Patent Application No. 13/025,822 filed 11 February 2011, the entireties of which are incorporated herein by reference. While filtering in this manner eliminates the need for a full search of the message data stores each time the user wishes to review only a subset of messages of interest, the filters employed are typically Boolean and based only on the express characteristics of the messages being searched (e.g., based on whether the message has a status of "sent", the sender address identified in the message header, the user account with which the message is associated, etc.), and further, the filtering criteria are typically configured within the application displaying the filtered message set, and the availability of the filter is typically restricted to that particular application.

Accordingly, the embodiments and examples herein provide a classification engine system for implementation on an electronic device, and electronic device, and a method for classifying data objects, such as messages stored at the electronic device, to create and manage relationships among individual data objects, and to associated additional attributes with data objects, thus facilitating subsequent aggregation of data for presentation to the user and filtering or searching of the data objects. This system, electronic device and method are implemented using rule engines registered with the classification engine system that are executed to evaluate the input data objects to generate classifications to be attached to the data objects. These classifications are then stored in a classification data store for later retrieval. The rule engines themselves need not be integrated within the application receiving or manipulating the data objects, but can be provided by external applications or modules on the electronic device.

These embodiments will be described and illustrated primarily in relation to electronic devices, such as tablet computers, smartphones, or any other suitable electronic device provided with sufficient user interface mechanisms as will be understood by those skilled in the art from the following description. It will be appreciated by those skilled in the art, however, that this description is not intended to limit the scope of the described embodiments to implementation on tablets or smartphones in particular. For example, the methods and systems described herein may be applied to any appropriate communication device or data processing device adapted with suitable user interface mechanisms, whether or not the device is adapted to communicate with another communication or data processing device using a network communication interface adapted to communicate over a fixed or wireless connection, whether provided with voice communication capabilities or not. The device may be additionally or alternatively adapted to process data and carry out operations on data in response to user commands for any number of purposes, including productivity and entertainment. In some examples, data may be accessed from a different device. Therefore, the examples described herein may be implemented in whole or in part on electronic devices including without limitation cellular phones, smartphones, wireless organizers, personal digital assistants, desktop computers, terminals, laptops, tablets, e-book readers, handheld wireless communication devices, notebook computers, portable gaming devices, tabletop displays, Internet-connected televisions, set-top boxes, digital picture frames, digital cameras, in-vehicle entertainment systems, entertainment devices such as MP₃ or video players, and the like. In the primary examples described herein, the electronic device includes an integrated touchscreen display; however, it will be readily understood by those skilled in the art that a touchscreen display is not necessary. In some cases, the electronic device may be configured to output data to be painted to an external display unit such as an external monitor or panel, tablet, television screen, projector, or virtual retinal display (via a data port or transmitter, such as a Bluetooth® transceiver, USB port, HDMI port, DVI port, and the like). For such devices, references herein to a "display," "display screen" or "display interface" are intended to encompass both integrated and external display units.

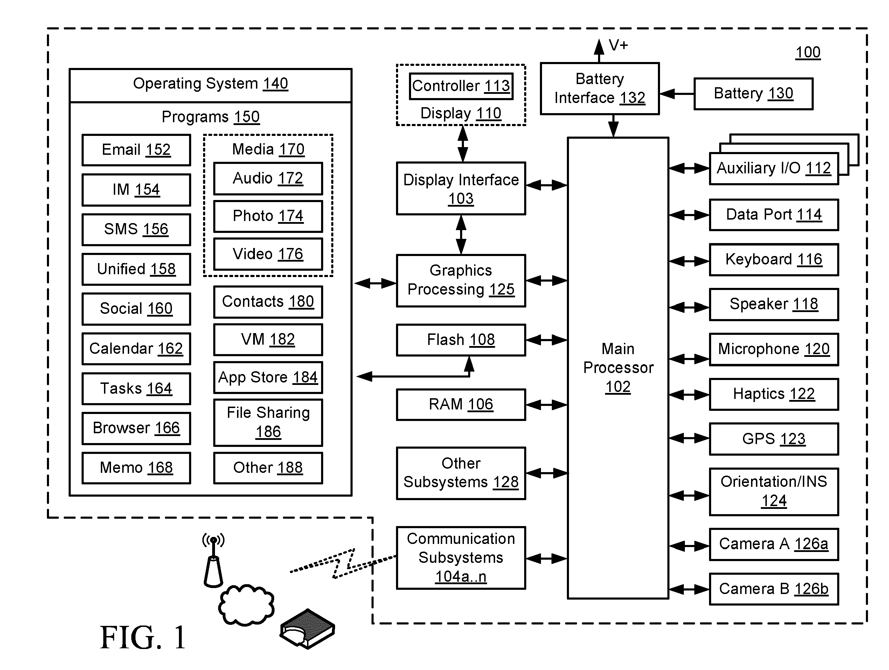

FIG. 1 is a block diagram of an example of a mobile electronic device 100 that may be used with the embodiments described herein. It should be understood that the components described in FIG. 1 are optional and that an electronic device used with various embodiments described herein may include or omit components described in relation to FIG. 1. The electronic device 100 includes a number of components such as a main processor 102 that controls the device's overall operation. Other processors or components can be included for functions not explicitly detailed herein, such as power management and conversion, encoding and decoding of audio and other data, and the like. Those skilled in the part will appreciate that such components, if present, are not illustrated here for ease of exposition.

The electronic device 100 may be a battery-powered device, having a battery interface 132 for receiving one or more batteries 130. Alternatively or additionally, the electronic device 100 may be provided with an external power supply (e.g., mains power, using a suitable adapter as necessary). If configured for communication functions, such as data or voice communications, one or more communication subsystems 104a..n in communication with the processor are included. Data received by the electronic device 100 can be received via one of these subsystems and decompressed and/or decrypted as necessary using techniques and components known to persons of skill in the art. The communication subsystems 104a..n typically include a receiver, transmitter, and associated components such as one or more embedded or internal antenna elements, local oscillators, and a digital signal processor in communication with the transmitter and receiver. The particular design of the communication subsystems 104a..n is dependent upon the communication network with which the subsystem is intended to operate.

For example, data may be communicated to and from the electronic device 100 using a wireless communication subsystem 104a over a wireless network. In this example, the wireless communication subsystem 104a is configured in accordance with one or more wireless communications standards. New wireless communications standards are still being defined, but it is believed that they will have similarities to the network behaviour described herein, and it will also be understood by persons skilled in the art that the embodiments described herein are intended to use any other suitable standards that are developed in the future. The wireless link connecting the wireless communication subsystem 104a with the wireless network represents one or more different Radio Frequency (RF) channels, operating according to defined protocols specified for the wireless communications standard, and optionally other network communications.

The electronic device 100 may be provided with other communication subsystems, such as a wireless LAN (WLAN) communication subsystem 104b or a short-range and/or near-field communications subsystem 104c. The WLAN communication subsystem 104b may operate in accordance with a known network protocol such as one or more of the 802.11™ family of standards developed or maintained by IEEE. The communications subsystems 104b and 104c provide for communication between the electronic device 100 and different systems or devices without the use of the wireless network, over varying distances that may be less than the distance over which the communication subsystem 104a can communicate with the wireless network. The subsystem 104c can include an infrared device and associated circuits and/or other components for short-range or near-field communication.

It should be understood that integration of any of the communication subsystems 104a..n within the device chassis itself is optional. Alternatively, one or more of the communication subsystem may be provided by a dongle or other peripheral device (not shown) connected to the electronic device 100, either wirelessly or by a fixed connection (for example, by a USB port) to provide the electronic device 100 with wireless communication capabilities. If provided onboard the electronic device 100, the communication subsystems 104a..n may be separate from, or integrated with, each other.

Possible network topologies for use with the device 100 will be known to those skilled in the art. As only one example, a host system may be provided, which can be an own-premises local area network (LAN), or wide area network in communication with LANs, with local computing resources such as one or more servers, data repositories and client devices such as terminals. The host system may comprise those components necessary to provide services to users over the LAN and also over a public or private network, such as the Internet, at their respective devices 100. The services can include but are not limited to messaging, directory services, collaborative applications, calendaring applications, search engines and file servers. The device 100 could access the host system using one or more of its communication subsystems 104a..n, for example through an access point, via the public or private network, and optionally via a public switched telephone network and a wireless network.

The main processor 102 also interacts with additional subsystems (if present), the general configuration and implementation of which will be known to those skilled in the art, such as a Random Access Memory (RAM) 106, a flash memory 108, a display interface 103 and optionally a display 110, other data and memory access interfaces such as a visualization (graphics) processor 125, auxiliary input/output systems 112, one or more data ports 114, a keyboard 116, speaker 118, microphone 120, haptics module 122 (e.g., a driver and a vibratory component, such as a motor), GPS or other location tracking module 123, orientation and/or inertial navigation system (INS) module 124, one or more cameras, indicated at 126a and 126b and other subsystems 128. In some cases, zero, one or more of each of these various subsystems may be provided, and some subsystem functions may be provided by software, hardware, or a combination of both. For example, a physical keyboard 116 may not be provided integrated with the device 100; instead a virtual keyboard may be implemented for those devices 100 bearing touch screens, using software components executing at the device. Additional display interfaces 103 or displays 110 may be provided, as well as additional dedicated processors besides the visualization processor 125 to execute computations that would otherwise be executed by the host processor 102. Additional memory or storage modules, not shown in FIG. 1, may also be provided for storing data, which can contain flash memory modules as well. Examples include non-volatile memory cards such in the microSD and miniSD formats defined by the SD Association, San Ramon, California. Such storage modules may communicate with the mobile device 100 using a fixed or wireless connection.

A visualization (graphics) processor or module 125 may be included in the electronic device 100. The visualization module 125 analyzes and processes data for presentation via the display interface 103 and display 110. Data originally prepared for visualization on a large-screen display may require additional processing prior to visualization on a small-screen display. This additional processing may be accomplished by the visualization module 125. As will be appreciated by those of skill in the art, the visualization module can be implemented in hardware, software, or a combination thereof, and can include a dedicated image processor and associated circuitry, or can be implemented within main processor 102. Rendered data for painting to the display is provided to the display 110 (whether the display 110 is external to the device 100, or integrated) via the display interface 103.

Content that is rendered for display may be obtained from a data object such as a message, word processor document, webpage, or similar file, which is either obtained from memory at the device such as flash memory 108 or RAM 106, or obtained over a network connection, whether from the host system or any other suitable network resource, such as a message server, web server, and so forth. A suitable application, such as a messaging application, viewer application, or browser application, or other application, can process and render the object for display in accordance with any formatting or stylistic directives included with the document. FIG. 1 illustrates possible components of the device 100, such as the operating system 140 and programs 150, which can include zero, one or more applications such as those depicted. Other software components besides those explicitly illustrated in FIG. 1 can also be included, as is well known to those skilled in the art. Programs 150 may be installed on the device 100 during its manufacture or together with loading of the operating system 140, or at a subsequent time once the device 100 is delivered to the user. These software applications may be supplied by the device manufacturer or operating system provider, or may be third party applications. The additional applications can be loaded onto the device 100 through at least one of the communications subsystems 104a..n, the data port 114, or any other suitable device subsystem 128.

Specific examples of applications include an email messaging application 152, as well as other types of messaging applications for instant messaging (IM) 154 and Short Message Service (SMS 156). Other applications for messaging can be included as well, and multiple applications for each type of message format may be loaded onto the device 100; there may be, for example, multiple email messaging applications 152 and multiple instant messaging applications 154, each associated with a different user account or server. Alternatively different applications may be provided to access the same set of messages or message types; for example, a unified message box function or application 158 may be provided on the device 100 that lists messages received at and/or sent from the device, regardless of message format or messaging account. Other applications include social networking applications 160, which may provide messaging function, a content reader function, or both; browser applications 166; calendar applications 162, task applications 164, memo applications 168 and contacts applications 180, which may permit the user of the device 100 to create or receive files or data items for use in personal organization and organization of contacts; media applications 170, which can include separate components for playback, recording and/or editing of audio files 172 (including playlists), photographs 174, and video files 176; virtual machines 182, which when executing provide discrete runtime environments for other code on the device 100; "app store" applications 184 for accessing vendor sites offering software applications for download (and optionally for purchase) to the device 100; direct or peer-to-peer file sharing or synchronization applications 186 for managing transfer of files between the device 100 and another device or server such as a synchronization or hosting service, using any suitable protocol; and other applications 188.

For those applications that have a need to store data at the device 100, the application may store data in the device's file system; however, a dedicated data store or data structure may be defined for each application. This data store may be, for example, a message data store for each messaging application. Permission to access the data store may be limited to the associated application, although permissions may be configured differently so that other applications or functions executing on the device have access to the message objects stored in the message data stores, or at least have access to metadata for these message objects.

In some examples, the electronic device 100 may be a touchscreen-based device, in which the display 110 includes a touchscreen interface that provides both a display visual presentation of data and graphical user interfaces, and an input subsystem for detecting user input via a graphical user interface presented on the display 110 that may be converted to instructions for execution by the device 100. A display 110 that is a touchscreen may be the principal user interface provided on the electronic device 100, in which case other user input mechanisms such as the keyboard 116 may not be present, although in some examples, a keyboard 116 and/or additional buttons, a trackpad or other user interface mechanisms may still be provided. In touchscreen embodiments, the display controller 113 and/or the processor 102 may detect a touch by any suitable contact member on the touch-sensitive display interface 110 (references to the "display 110" herein include a touchscreen display, for those electronic devices implemented with touchscreen interfaces). The configuration of the touchscreen display and display controller for detecting touches will be known to those skilled in the art.

Generally, user interface (UI) mechanisms may be implemented at the electronic device 100 as hardware, software, or a combination of both hardware and software. Graphical user interfaces (GUIs), mentioned above, are implemented using the display interface 103 and display 100 and corresponding software executed at the device. Touch UIs are implemented using a touch sensing mechanism, such as the aforementioned trackpad, and/or touchscreen interface, discussed in more detail below, along with appropriate software used to convert touch information to signals or instructions. A voice or speech UI can be implemented using the microphone 120, together with modules implemented in hardware or software operable to detect speech patterns or other sounds, and to decode or correlate detected sounds to user commands. A tracking (e.g., eye-tracking or facial tracking) UI or perceptual UI can be implemented using the camera 126a and/or 126b, again with appropriate hardware and/or software modules to analyze received visual data to detect the presence or position of a user's face or eyes, which are used to derive commands or contextual information to control device operations. A kinetic UI can be implemented using the device's orientation/INS module 124, or using the GPS module 123 or another locating technology module, together with appropriate software and/or hardware modules to detect the motion or position of the electronic device 100, again to derive commands or contextual information to control the device. Various components used to enable these various forms of UIs may serve other interface functions beyond the purpose of user or contextual control of the electronic device 100. The microphone 120, for example, is typically used in the course of voice communications on a smartphone, in which case the speech and other sounds picked up by the microphone are simply converted to data for transmission over the wireless network and are not analyzed to detect context or commands. Similarly, the camera 126a and/or 126b are typically used to generate user content (e.g., video and still photographs) without further analysis to identify context or commands. Generally, the implementation of touch, voice, tracking/perceptual, and kinetic UIs will be understood by those skilled in the art.

The orientation/INS module 124 can include one or more motion or tilt sensors capable of detecting gravity- or motion-induced forces to determine physical conditions of the device such as acceleration and angular velocity, which in turn can be used to determine the orientation or attitude of the mobile device 100, or changes in orientation or attitude, in two or three dimensions. Motion sensors that may be provided in the orientation/INS module 124 include an accelerometer for detection of linear motion, and a gyroscope for detection of rotational motion. Accelerometers and gyroscopes suitable for use in handheld mobile devices 100 include the BMA150 digital 3-axis accelerometer, available from Bosch Sensortech GmbH, Reutlingen, Germany, and the MPU-3050 triple axis gyroscope available from InvenSense, Sunnyvale, California. These components may include integrated processors for processing signals generated by the accelerometer or gyroscope to compute motion data, thereby offloading motion algorithm computation from the host processor 102. The selection and implementation of suitable motion sensors will be understood by those skilled in the art. The orientation/INS module 124, if suitably equipped, may be used to detect changes in orientation of the device 100 between a landscape and portrait mode (i.e., a rotation of approximately 90 degrees, within a given tolerance range), or changes in orientation of the device in three-dimensional space; data obtained by the module 124 may also be used to detect movement of the device 100 in three-dimensional space, and to perform dead reckoning calculations to determine the position of the device 100 due to such movement.

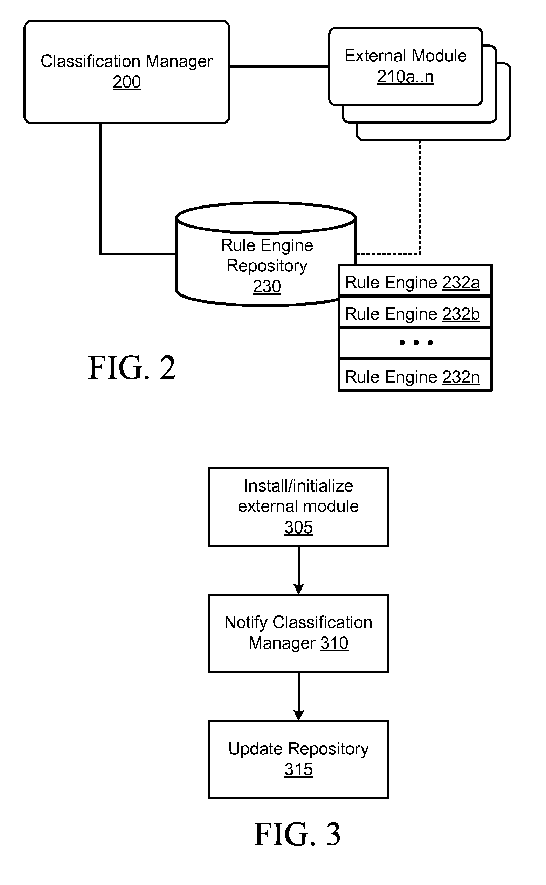

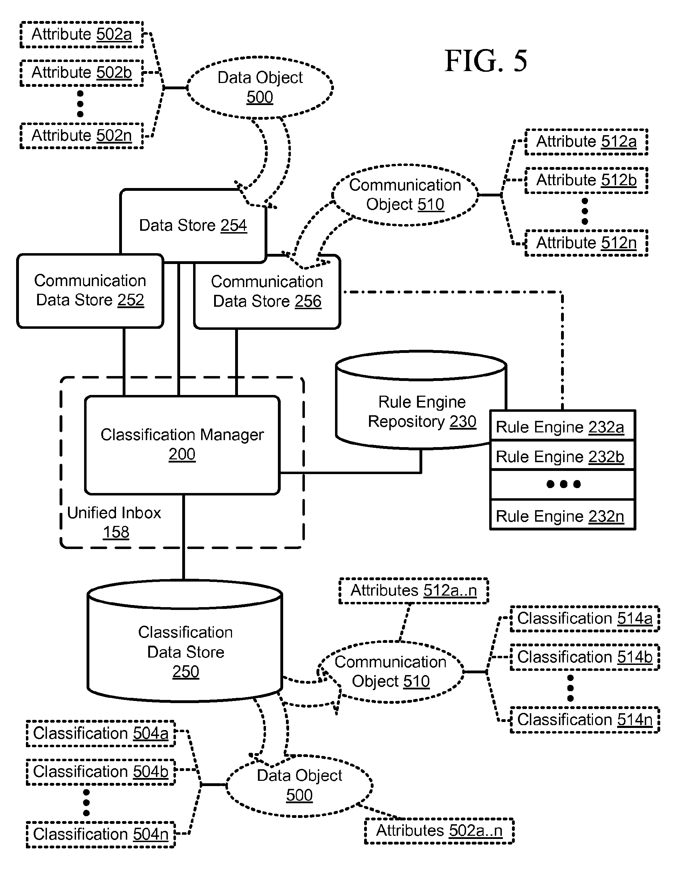

As described herein, a classification engine system is provided on the electronic device 100 for creating and managing relationships among individual message data objects, and indeed among other types of data objects, to facilitate aggregation of data for presentation to the user. Schematic representations of select portions of the system in relation to select components resident on the electronic device 100 are shown in FIGS. 2 and 5. The system includes a module referred to herein as a classification manager 200, which provides an interface between client applications and data sources on the device 100, and rules engines that operate to assign one or more categories or classifications to the various data objects presented for classification based on characteristics of the data objects.

In this description, a data object includes data structures representing different types of data items stored on the electronic device. The types of data objects can range from messages (email, IM, SMS, etc.), to calendar events, tasks, and other personal information, to documents of various types. The data object can be a discrete file maintained in device storage or temporary memory, or a data structure composed of individual records or fields within a data store comprising a unit of information intended for user consumption. For example, a word processing document or slide presentation document is typically stored as a discrete, single file, whereas a set of individual electronic messages might be stored in a single file or database, although individual messages may be identified and extracted. A data object may have one or more attributes comprised in either the data object content or its associated metadata (e.g., associated sender or recipient identities; a message status such as "new", "read", "sent", etc.; an associated timestamp; a document or data object type, such as email, PDF, calendar event, memo document, etc.; a document size). The data object may have an initial set of attributes at the time it is created or received by the electronic device 100, and attributes may be subsequently removed or altered, and additional attributes, such as a classification attribute, may be subsequently associated with the data object. A given attribute has a corresponding value. A value of a given attribute may be referred to as a "characteristic" of the data object. Characteristics of a data object can also include characteristics of the data object content, such as whether its content includes a string or value matching a specified string or value. The allocation of one or more classification attributes to a data object, and the assignment of a value to the classification attribute, may be variously referred to as "classifying", "tagging", "categorizing", and variants thereof. The value assigned to the classification attribute may be variously referred to herein as a "classification value", "classification", "tag", or "category".

Briefly, the classification manager 200 obtains rules for execution against various data object types, these rules being embodied in rule engines provided by the various client applications making use of the classification system on the electronic device 100 and/or by other applications or components provided on the device 100, and stores these rule engines 232a..n in a rule engine repository 230 at the electronic device 100. When the system is subsequently called upon to classify a data object, such as a message, the classification manager 200 determines which of the rule engines 232a..n in the rule engine repository 230 matches the data object, and effects the execution of the rule engine or engines to classify the data object. Any classifications determined as a result of this procedure are then stored in a classification data store 250, shown in FIG. 5, for later use in retrieval and presentation of data objects at the electronic device 100.

Turning to FIG. 2, the registration of client applications and rule engines will first be described. One or more external modules 210a..n, i.e., applications, modules, code snippets, and the like on the electronic device 100 (that are "external" to the classification system), are provided. The external module can be any one of the programs 152..188 described above with reference to the example mobile communication device of FIG. 1. While it will be seen that the examples described herein primarily refer to messaging and personal information management (PIM) applications as external modules or client applications, the classification system and related functions described here need not be so limited. Other applications intended for entertainment or productivity applications, such as the browser application 166, media application 170, or word processor or other applications (not illustrated in FIG. 1) may likewise register with the classification manager 200 to provide a rule engine. Other types of applications not mentioned in the description of FIG. 1, such as analytics engines and account management tools above may comprise an external module. Indeed, an external module need not be an application primarily intended to provide the user with access to device functions or data, as in the case of a messaging, PIM, productivity or entertainment application. As explained below, it is expected that an external module 210a..n registering with the classification manager 200 provide a rule set in the form of a rule engine for use in classifying data objects, but it is not necessary that the same external module 210a..n subsequently extract a benefit from the classification of the data objects. Thus, the external module 210a..n may simply comprise a code package, module, plug-in, etc., containing a rule engine for provision to the classification manager 200. This enables a third-party developer, for example, to develop a custom set of rules for use with the classification manager 200 and with data objects belonging to third-party applications.

The one or more external modules 210a..n register with the classification manager 200 upon initialization. "Initialization" of an external module 210a..n can include the initial provisioning or installation of the external module 210a..n, which can take place at various times, e.g., when the operating system 140 of the electronic device 100 is installed, or at a later point, as described above. Initialization may also occur upon an update or upgrade of a previously-installed external module 210a..n. When the external module 210a..n registers with the classification manager 200, the electronic device 210a..n also provides its corresponding rule engine 232a..n to the classification manager 200 for storage in the rule engine repository 230. It is generally expected that each external module 210a..n will provide only a single rule engine, although in some examples, a single external module may provide multiple rule engines to the classification manager 200.

The provision of the rule engine by the external module 210a..n for storage in the rule engine repository 230 may be implemented a number of ways, which will be known to those skilled in the art. For example, a registering external module 210a may provide, as part of its registration message, a pointer to the location in device memory where its corresponding rule engine 232a is stored. The classification manager 200 may then retrieve the rule engine from the identified memory location and transfer it to the rule engine repository 230, which can be a separate data store maintained elsewhere on the device. Alternatively, the classification manager 200 may simply store a pointer to the rule engine 232a in the rule engine repository 230, in which case updated information will need to be provided to the classification manager 200 if the location of the rule engine 232a is moved. FIG. 2 simply illustrates, for ease of reference, an example in which the rule engine repository 230 contains a set of rule engines 232a..n provided by various corresponding external modules 210a..n. The rule engine repository 230 may comprise a shared library of rule engines 232a..n, a database, or any other appropriate data structure.

The specific format of each rule engine 232a..n can be selected by the person skilled in the art according to the runtime environment in which the rule engine will be executed. Thus, in some cases, an appropriate form for the rule engine may be a C++ or Java object containing instructions for execution. However the rule engine is expressed, the engine can include an identifier of the type of data object types to which the rules of the rule engine are to be applied, as well as one or more rules associating classifications to data objects in based on specified conditions. These conditions may be predicated on existing characteristics of the data object to be processed by the rule engine, or on conditions external to the data object. Table 1 sets out, in plain language, examples of rules that may be implemented by one or more rule engines 232a..n:

**Table 1. Examples of rules for implementation by rule engines.**

| | Ext. Module | For data object type | Condition | Classification |
|---|---|---|---|---|
| 1 | Unified 158 | Message (any type) | Sender address has specified domain | "work" |
| 2 | Unified 158 | Message (any type) | Message status or flag equals "draft" | "draft" |
| 3 | Unified 158 | Message (any | Metadata or content | "patents" |
| | | type) | contains string "patent" or "invent" | |
| 4 | Unified 158 | Email message | Sender/recipients contain specified addresses | "project <name>" |
| 5 | Unified 158 | Social message | Message is social networking communication object | "social" |
| 6 | Contacts 180 | Message (any type) | Sender address is work address of specified contact | "work" |
| 7 | Contacts 180 | Message (any type) | Received from/sent to specified contact (regardless of sender address) | "personal" |
| 8 | Contacts 180 | Message (any type) | Message is social networking communication object to/from specified contact | "buddies" |
| 9 | Custom | Any type | Playback count or access count exceeds specified limit | "favorite" |
| 10 | Custom | Any type | Data object having author/sender that is "starred" contact in contacts data store | "important" |

These example rules are each associated with a particular external module, which in these examples can be the unified inbox application 158, IM messaging application 154, contacts application 180, or a custom external module providing a custom rule set, as mentioned above. A single rule engine can include multiple rules; thus, a single rule engine associated with the unified inbox application 158 may include all of the four rules listed in Table 1. It can be seen that the example rules defined by the unified inbox rule engine are directed to communication data object types (either any type of communication data object, such as an email, IM, SMS, social networking message, etc., or to a specified type of object, such as email). The example unified inbox rules include conditions based on typical message attributes, such as associated sender or recipient addresses (if the sender address is from a specified domain, then classify the message as "work"; if the sender and recipients include a specific set of addresses or contacts, classify the message as belonging to a specified project name), a message status (if the message is a draft message, then classify the message as "draft"), or content of the message (if the message metadata or content contains the string "patent" or "invent", then classify the message as "patents"). The example unified inbox rules are thus rules directed to the same types of data object as those data object types associated with the application providing the rule engine (the unified inbox application displays listings of messages, and its associated rule engine processes communication data objects, i.e., messages). These are also examples of rules that are based only on characteristics of the data object itself: when the data object is processed by the rule engine, the rules only require inspection of that data object's characteristics for the purpose of classification.

Other rule engines may define rules that are applied to data objects other than the types of data objects processed by the associated application. The example rules associated with the contacts application 180, for example, are used to process communication data objects (in these examples, any type of message), whereas the contacts application 180 itself is not used to process this type of data object, but is used instead to manage a PIM data object, namely contact information in a contacts data store (e.g., an "address book"). Further, these example contacts application rules are based not only on the characteristics of the data object of interest (which is a message), but also on another type of data object. For example, the first contacts application rule specifies that when a message has a sender address that is a contact's "work" address, the message is to be classified as "work". The designation of a "work" address (as opposed to a "home" address) is carried out using the contacts application, and the designation is stored in a contact data object in the contacts data store. Thus, when a communication data object is processed by the rule engine according to this rule, the rule engine must use the communication data object's sender address to query the contacts data store on the electronic device 100 for a matching contact data object, and then determine whether the sender address is designated as a "work" address in the contact data object.

Still other rule engines may not be associated with any application used to access or manage any particular type of data object stored on the electronic device 100, as in the case of the so-called "custom" external module referenced in the last two example rules of Table 1. Rule engines of this type may be defined to operate on specific data object types (e.g., communication data objects, email data objects in particular, contact data objects) or on any type of data object stored at the device. Again, the rules may include conditions based on a characteristic of the data object to be processed (e.g., any type of data object on the device may be classified as a "favorite" if it has been accessed at least a specified number of times), or based on a factor external to the data object itself (e.g., a data object such as a text document or a message having an author or sender corresponding to a "starred" (marked as important or favorite) contact in the contacts data store is classified as "important").

The foregoing are examples of simple rules that may be implemented in a rule engine that may be represented as Boolean expressions taking elementary data object characteristics as inputs. Other, more complex rules may be implemented by a rule engine; for example, a semantic analysis of the data object content (such as an email message body) may be undertaken to categorize the data object, or the rule engine may also take as input contextual information (such as time of day, current network status, signal strength, current geographic location, and other environmental or operational conditions of the electronic device 100) obtained from a device state module or from other components of the electronic device 100, such as the GPS module 123.

The flowchart of FIG. 3 provides a brief overview of the registration of an external module 210a..n and with the classification manager 200. At 305, the external module 210a..n is installed or otherwise initialized. At 310, a notification of registration of the external module is provided to the classification manager 200. At 315, the rule engine repository 230 is updated with the appropriate rule engine 232a..n.

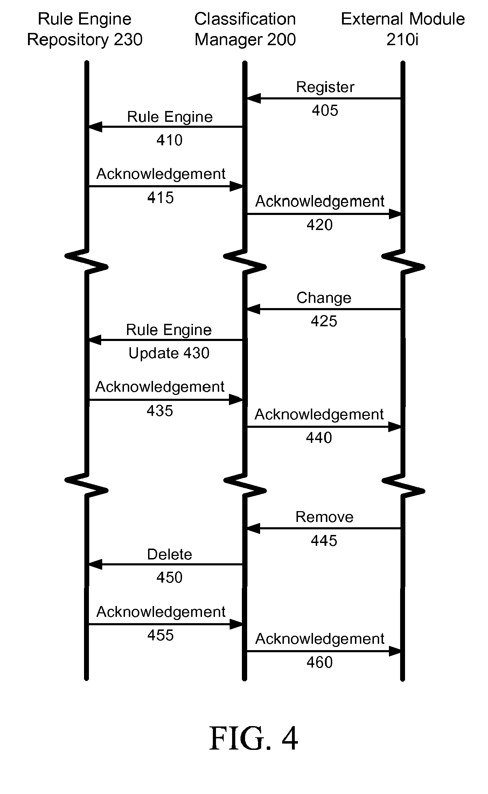

FIG. 4 illustrates communication flow between these various components for initial registration of the rule engine 232a..n, and subsequent updates. On initialization, a registering external module 210i provides a registration message 405 to the classification manager 200. The registration message 405 contains, at a minimum, an identifier for the external module 210i, and additional information to enable the registration of the corresponding rule engine 232i in the rule engine repository 230; for example, the registration message 405 can include the pointer to the location where the rule engine 232i is currently stored, or a rule engine definition. Additional information concerning the status of the external module 210i or corresponding rule engine 232i may also be provided, such as a version number or last edited/downloaded timestamp. Access to the classification manager 200 may be provided through an API (application programming interface), and the registration message 405 is constructed in an appropriate manner for receipt by the classification manager 200.

The classification manager 200, given this information from the registration message 405, provides the rule engine 232i to the rule engine repository 230 as indicated by message 410. The rule engine repository 230 provides confirmation to the classification manager 200 that the rule engine was successful registered in the rule engine repository 230, as indicated by acknowledgement 415. Upon receipt of the successful registration message 415, a further acknowledgement message 420 confirming registration is provided by the classification manager 200 to the external module 210i. The acknowledgement 415 in some examples may indicate that registration of the rule engine failed, in which case an error may be issued to the external module or to the user (via a user interface); the external module may reattempt registration. Further, if acknowledgement is not received by the external module 210i within a specified period, the external module 210i may reattempt registration with a new registration message 405, or else may issue an error notification.

Optionally, the classification manager 200 sends an acknowledgement message (not indicated in FIG. 4) to the external module 210i in response to the registration message 405. If the registration message 405 did not provide sufficient information to enable transfer of the corresponding rule engine 232i to the rule engine repository 230, then the acknowledgement message may include a request or instruction for the rule engine 232i, for example a request for a pointer or other location information identifying where the rule engine 232i is stored in memory at the device 100, or else an instruction to send the rule engine 232i as an object to another address on the device 100 specified in the response. The external module 210i may then respond by providing the rule engine 232i to the rule engine repository 230, and the rule engine 232i, however it is recorded with the rule engine repository 230, is stored in association with at least an identifier of the corresponding external module 210i.

After initial registration of the external module 210i and initial recordal of the rule engine 232i in the rule engine repository 230, a change may be made to the rule engine 232i. This could be the result of an update or upgrade to the external module 210i; it could also result from a change made to the rules encoded in the rule engine 232i, since, as discussed below, some external modules may provide an option for a user or system administrator to add, delete or edit rules implemented by the rule engine. Thus, when the external module 210i detects that a change has been made to the rules implemented in the rule engine 232i stored in the rule engine repository 230, or that the location in which the rule engine 232i was stored has changed (if it is stored outside the rule engine repository 230 itself), a change notification message 425 is sent to the classification manager 200, similar to the registration message 405. Similar to the initial registration process described above, the classification manager 200 provides 430 the updated rule engine to the rule engine repository 230, and the rule engine repository 230 confirms registration in an acknowledgement message 435. The classification manager 200 in turn provides an acknowledgement message 440 to the external module 230i. Again, notifications of a failure to register the updated rule engine may be passed in the manner described above.

Finally, when an external module 210i is uninstalled, or the rule engine 232i is to be deleted, a remove notification 445 may be sent by the external module 210i to the classification manager 200, identifying the rule engine 232i to be deleted. Again, the classification manager 200 notifies the rule engine repository 230, this time in a delete message 450 indicating that the corresponding rule engine 232i is to be deleted. Confirmation of deletion 455 can be sent from the rule engine repository 230 to the classification manager 200, and confirmation of same 455 from the classification manager 200 to the external module 210i. In some examples, acknowledgement messages 455 or 460 may not be provided; if the external module 210i is being deleted, for example, the final acknowledgement from the classification manager 200 to the external module 210i may be not as execution of the external module would likely have been terminated. In still other examples, the remove message 445 may not be sent by the external module 210i, but by an operating system component. Further, rather than rely on the external module 210i to provide a remove notification to the classification manager 200, the classification manager 200 may instead periodically implement a garbage collection routine, which verifies that each existing rule engine 232a..n recorded in the rule engine repository 230 corresponds to an external module 210a..n that is currently installed on the electronic device 100; those rule engines that do not correspond to an existing external module are then deleted.

Once registration is complete and the appropriate rule engines 232a..n have been deposited or recorded with the rule engine repository 230, classification of messages and other data objects can be carried out. An example arrangement of the system for classifying data objects and method of operation is described with reference to FIGS. 5 to 8.

FIG. 5 further illustrates the interrelationship of the classification engine system and other components on the electronic device 100. The classification manager 200 is in communication with the rule engine repository 230, which records a number of rule engines 232a..n. The classification manager 200 is also in communication with a classification data store 250, which may be a relational database or other suitable data structure for recording the interrelationships of classifications and data object identifiers as discussed below. The classification data store 250 is maintained separately from the data stores used to store the data objects themselves, such as data stores 252, 254, and 256. In some examples, the classification manager 200 may be integrated in another application implemented on the electronic device 100. In this case, the classification manager 200 is integrated in the unified inbox application 158. This need not be the case; the classification manager 200 may operate as a standalone component. In either implementation, other applications, such as the email application 152, contacts application 180, etc., may be permitted access to the services provided by the classification manager 200 through a suitable API or other programmatic interface. The examples provided herein apply to either the integrated or standalone implementation.

The classification manager 200 and optionally the rule engines 232a..n obtain data from one or more data stores 252, 254, 256 on the electronic device 100, as indicated in FIG. 5. Some data stores illustrated in FIG. 5 are message (communication) data stores 252, 256, in particular, while data store 254 may be a data store associated with a different type of data object. Data objects 500, and communication data objects 510 specifically, each include one or more attributes or characteristics 502a..502n and 512a..n, respectively. These data objects 500, 510 are received in their associated data store 254, 256 as shown schematically in FIG. 5. After receipt in their respective data store, data from the data objects is provided to the classification manager 200, which may then invoke any applicable rules engines 232a..n to determine one or more classifications for the data objects. The result, as illustrated in FIG. 5, is a data object 500, 510 that includes not only its existing attributes, but also one or more classifications 504a..n, 514a..n, respectively.

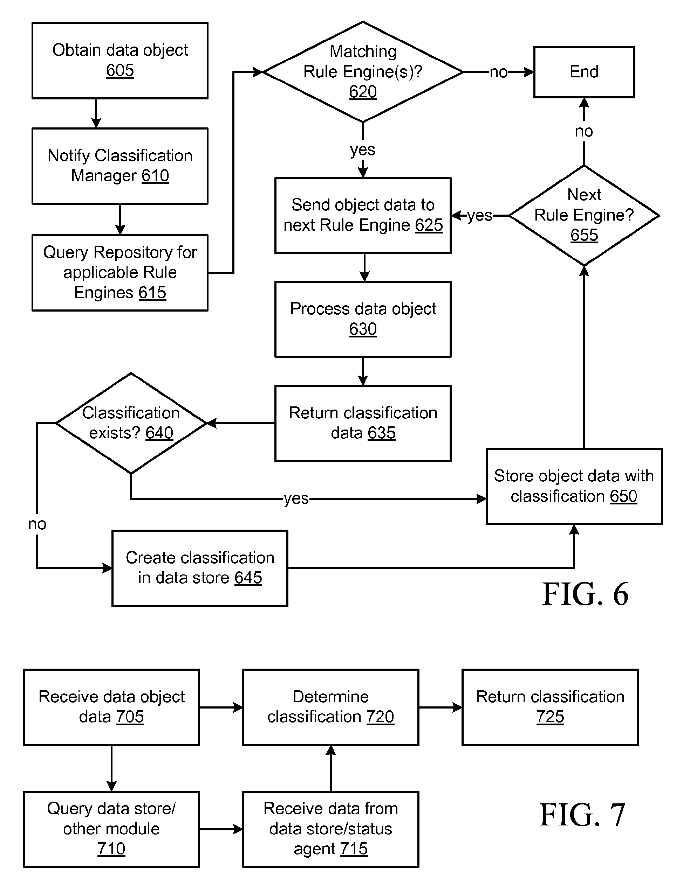

FIGS. 6 to 8 provide an overview of a method of processing an input data object to determine a classification, and corresponding communication flow between the various components illustrated in FIG. 5. This method is repeated for each data object to be processed. At 605, a new data object or a changed data object is obtained by the electronic device 100. A new data object may be "obtained" through receipt over a fixed or wireless connection, as in the example of a message addressed to a user of the electronic device 100 and received by the device, or in the example of a data object (such as a message, contact data object, etc.) that is received by the device 100 through synchronization with a server or other data source. The new data object may also be "obtained" in that it is generated by an application executing at the device, which may be the case where a message is composed at the electronic device 100, or a file is otherwise created (e.g., when a user creates a memo file by typing in notes via the keyboard 116 or by dictating into the microphone 120). A changed data object may be obtained by the user editing or altering the data object after it was initially stored at the electronic device 100; this may be the case, for example, where a draft message was created and stored using the email application 152, and the user subsequently accesses the draft message to edit the content or recipients designated for the message. A changed data object may also be obtained over a fixed or wireless connection, as in the case of synchronization when a newer version of an existing data object stored at a server or other repository is synchronized or merged with a corresponding data object stored at the electronic device 100 (for example, updating a contact data object with a new telephone number for that content). These examples of changed data objects reflect changes to the content of the data object; a changed data object can also be obtained as a result of a modification to the data object's metadata. For example, when a message is received at the device 100, it may be automatically assigned a status or flag indicating that it is "new" or "unread" or "unopened"; but once the message has been accessed by the user (e.g., for display on the display screen 110), the status of the message may be altered to remove the "new" designation, and/or to change the "unread" or "unopened" status to "read" or "opened". Whether the data object is new or changed, the result is a change to the data object as represented in the corresponding data store. This is reflected by actions 800a and 800b, indicating the receipt of a new object or a status or attribute change to the object, respectively. In this example, the new or changed object is received at the application data store 256.

As a consequence of this change to the data store 256, any corresponding applications at the device and the classification manager 200 may receive a notification as indicated at 610 of FIG. 6. This notification may comprise a notification event message addressed to the application. For example, each application that is "interested" in the status of a data store and the addition of/change to data objects stored in the data store may register as a listener for each data store of interest. This so-called "interest" is typically defined programmatically within the application functions. A basic instance of the notification event message would include a data object identifier or name (e.g., a message ID, a message subject line, a contact ID, a filename and sufficient information so that the object can be located in the file system, and so forth) and a descriptor that is indicative of the data object type (e.g., email, picture, MP3, IM), and optionally an associated account, if there is more than one possible source for that data object type (e.g., more than one email account may be provisioned, and more than one email data store may be present on the device 100). A more robust notification event message could include not only the data object identifier, but also a status indicator (indicating, for example, whether the data object is new, changed, or other status).

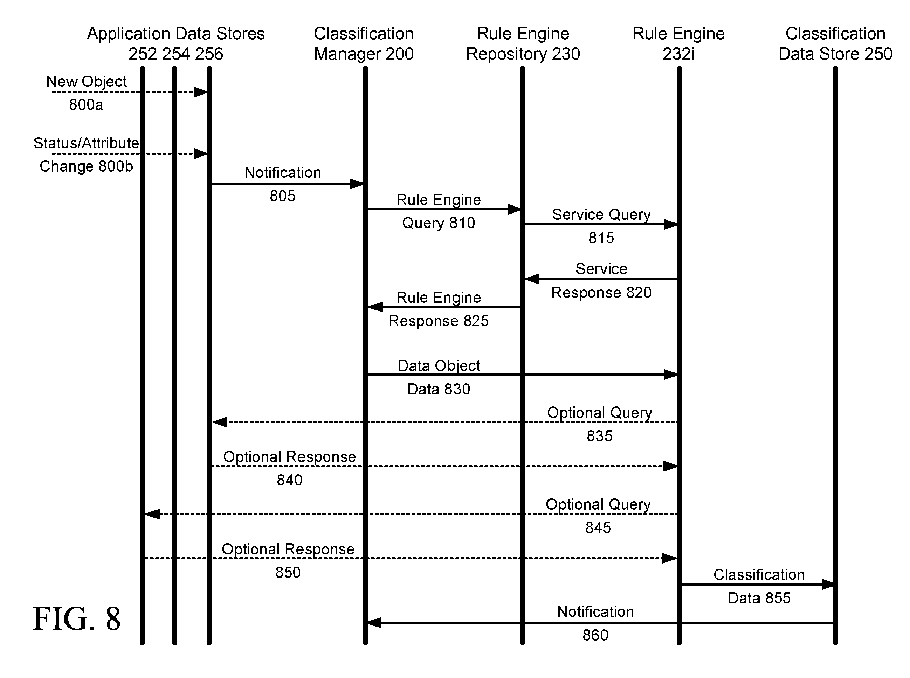

The notification event could also include some data object metadata or content. The unified inbox application 158, for instance, could receive notification event messages for each data store corresponding to a different communication data object type and/or account (e.g., each email data store, each SMS data store, each IM data store, each social networking message data store, etc. on the device 100) and thus receive notifications from each data store upon a change, such as receipt of a new message, change in status of an "unopened" message to an "opened" message, or deletion of a message. If the notification event messages include communication data object metadata such as sender identifiers, timestamps, and/or subject line, this data can be used to populate a message listing view generated by the unified inbox application 158. Each element in the message listing view representing a message can serve as a user interface entry point for access to the corresponding messaging service or application associated with that message. If the classification manager 200 is integrated in the unified inbox application 158 as illustrated in FIG. 5, then the receipt of the notification event messages by the unified inbox application 158 will also constitute receipt of the notification by the classification manager 200. Otherwise, the classification manager 200, as a standalone process on the device, will receive this notification directly. The communication of the notification to the classification manager 200 is illustrated in FIG. 8 as notification message 805.

The above description contemplates that notification event messages are provided incrementally to the classification manager 200, as each new event (the arrival of a new data object or a change to an existing data object) is detected. In some examples, however, the classification process described herein is applied to an existing set of data objects, such as the current collection of communication data objects stored in the various message stores on the electronic device 100. In that case, the classification manager 200 may query each data store for an index of its contents, so the notification received by the classification manager 200 may represent a number of data objects, or else a notification will be provided by the data store for each existing data object.

Regardless, upon receipt of the notification 805 by the classification manager 200 for a data object, it is then determined which of the rule engines registered with the rule engine repository 230 will serve the data object. To this end, the classification manager 200 calls the rule engine repository 230 for an identification of the applicable rule engines at 615 of FIG. 6. The query passed to the rule engine repository 230, illustrated in FIG. 8 as rule engine query 810, can include the same data object information received by the classification manager 200 in the notification message 800a, 800b. The rule engine repository 230 in turn queries each rule engine 232i for an indication (e.g. a Boolean response) whether it will serve that type of data object, as indicated by service query 815 in FIG. 8, and based on the service response 820 received from each rule engine 232i, builds a list of the matching rule engines (i.e., an identification of the rule engines that will serve that data object type). The rule engine repository 230 returns a response 825 to the classification manager 200 indicating which rule engines 232a..n will service the data object.

Returning to FIG. 6, the classification manager 200, given the rule engine repository response, determines at 620 whether there are any matching rule engines. If there are no matching rule engines, the method ends; no classification of the data object is carried out. If there is a matching rule engine, the data object data is passed to the first matching rule engine at 625 for processing as indicated at 630. The passing of the data object data is depicted by message 830 in FIG. 8. Again, the data object information that is passed to the rule engine may be the same data object information that was received by the classification manager 200 in the notification 805. The rule engine then executes and applies its rules to the data object information.

As noted above, the rule engine may require additional data to process the data object and determine a classification value for the data object. The additional data may be retrieved from the data store storing the data object, and/or a data store or other data source (e.g., device state module) on the device. FIG. 7 summarizes the processing by the rule engine. At 705, the rule engine receives the data object data (the data object data message 830 of FIG. 8). If the data object data received by the rule engine from the classification manager 200 is sufficient for the rule engine to complete execution, then the classification is determined at 720 in accordance with the rules defined in the rule engine. As an example, sample rule 5 of Table 1 provides that any communication data object that is a social message is tagged with the classification "social". If the data object data received from the classification manager 200 includes at least the descriptor of the data object type (which itself may be considered to be a characteristic of the data object), then no further data may be necessary for the rule engine to complete execution.

Otherwise, any necessary data stores or other modules are queried at 710, for a response received at 715. This query may be a query of the data store corresponding to the data object to retrieve full data object metadata or data object content: for example, referring to the example rule 3 above, for a received communication data object of any type (email, social, IM, etc.) the full metadata and content of the message is retrieved so that a search for a string equal to "patent" or "invent" can be executed. If a match is found, then the communication data object will be tagged with the classification value "patents". Otherwise, no classification is determined for the data object by the rule engine implementing example rule 3. Still further, the query may be made of a different data store. Rule 10 of Table 1, for example, specifies that any data object having an author or sender that is a "starred" (e.g., specially marked) contact in the contacts data store maintained at the electronic device 100 is classified as "important". Therefore, a first query may be required of the data object's data store to obtain the necessary metadata (an identifier for the data object sender or author); then, with this additional data, a further query is made of the contacts data store to determine whether there is a contact data object that is a match for the sender or author identifier. If there is a match, it is then determined whether that matching contact data object has the "starred" attribute set. Based on this determination, the rule engine assigns a classification value of "important" to the data object. The classification data store 250 itself may also be queried by a rule engine. The ability of a rule engine to query different data stores 252, 254, 256 or modules on the electronic device 100 may be restricted by permissions set for each data store.

FIG. 8 illustrates a possible communication flow for additional queries and responses passed between the executing rule engine 232i and the various data stores on the device 100. A first optional query 835 may be sent to the data store 256 at which the data object was received, and a corresponding response 840 received. A second optional query 845 may then be sent to another data store (or other module) on the device 100, with a corresponding response 850. It will be appreciated by those skilled in the art that the queries and responses depicted in FIG. 8, generally, can take any suitable format. In some cases queries may be made in the form of API calls to the data store or other module. In other cases, if the rule engine is provided with a pointer or address for the additional data object information required, the rule engine may simply retrieve the data from memory directly rather than initiate a query of another module on the device 100. It will also be understood that where feasible, the various steps and communications may be executed in a different order than depicted in the accompanying flowcharts and schematics. For example, if the queries 835 and 845 are independent, they may both be initiated prior to receipt of the first response 840. There may also be additional queries initiated by the rule engine 232i not illustrated in FIG. 8.

Once the rule engine has obtained any necessary data, this data is processed and a determination of the data object classification is made. The result, which is an identifier of the classification determined by the rule engine (which may be a null value in the case where the rule engine determines that no classification is to be assigned to the data object), is then returned as indicated at blocks 635 and 725 of FIGS. 6 and 7, respectively. The resultant classification value may be returned to the classification manager 200, which then stores the data object identifier in association with the classification value in the classification data store 250. In some implementations, the rule engine 232i may return the classification value directly to the classification data store 250 for storage, as indicated by message 855 in FIG. 8. If this is the case, once the value is stored in the classification data store 250, a notification 860 is sent to the classification manager 200 indicating that a classification for the data object has been added.

Returning again to FIG. 6, once the classification result is returned at 635, the process of storing the result in the classification data store 250 can include a determination whether the classification already exists in the classification data store 250, as indicated at block 640. As the classification database in the classification data store 250 is built, not every possible classification defined by the rule engines may have been created in the data store 250; moreover, new rule engines 232a..n and rules may be added, so new classifications may be defined at any time. If the classification already exists, then at 650 the data object data is stored in the classification data store 250 in association with the classification (e.g. by adding a new record including the data object identifier and optionally the data object type). Otherwise, the classification is created in the data store at 645 (e.g., by creation of a new table in the data store 645), and then the data object data is stored in association with this newly created classification at 650. The structure of the classification data store 250 may take any appropriate form. Table 2 below sets out example records in the classification data store 250 for a sample set of data objects, comprising mostly communication data objects such as email messages. The reference to the "Facebook" data object type refers to messages received from the Facebook™ social networking service provided by Facebook, Inc., Menlo Park, CA. Other examples of social networking service messages, which are not intended to be exhaustive, include messages and notifications received from the Twitter™ and LinkedIn™ social networking services provided by Twitter, Inc., San Francisco, CA and LinkedIn Corporation, Mountain View, CA. This table layout is provided only as an example, and is arranged in this form strictly the purpose of readability rather than to dictate a particular set of relationships between data object identifiers, data object types, and classification values.

**Table 2. Examples of relationships between classifications and data object data.**

| Classification 1 | "important" | | Classification 2 | "project pancake" | |
|---|---|---|---|---|---|
| Object ID | Type | | Object ID | Type | |
| 201204031314 | Facebook | | 201204030823 | Email | |
| 201204031115 | IM | | 201204021330 | Email | |
| 201204021401 | Email | | 201204020934 | Email | |
| newdesign.ai | Document | | 201204011001 | Email | |
| | | | 201203312002 | Email | |
| | | | | | |

| Classification 3 | "patents" | | Classification 4 | | "buddies" |
|---|---|---|---|---|---|
| Object ID | Type | | Object ID | | Type |
| 201204031115 | IM | | 201204031314 | | Facebook |
| 201204030832 | Email | | 201204031115 | | IM |
| 201203270054 | Email | | | | |

It can be seen in the above examples that some messages, such as the instant message with object ID "201204031115", is associated with three different classification values, "important", "patents", and "buddies", while the social networking data object with ID "201204031314" is associated with only one classification, "important". Table 2 also illustrates that data objects other than communication data objects may be recorded in the classification data store 250, such as the document "newdesign.ai".

Turning back to FIG. 6, once the classification returned by the rule engine is stored at 650, it is next determined 655 whether there is a further rule engine to be executed against the data object. If there are no further engines, the method ends. Otherwise, the method returns to 625, where the data object data is provided to the next rule engine, and the method and message flow described above is repeated. It will be appreciated by those skilled in the art that in this manner, each rule engine 232a..n effectively executes independently of the other rule engines, and each rule engine will not necessarily learn the outcome of the classification process undertaken by the other rule engines in respect of the data object. Similarly, the applications associated with each type of data object will not necessarily be notified that one of its associated data objects is being classified by the classification system engine, since the classification data is stored separately from the application data stores 252, 254, 256.

As noted above, the data object information passed to the classification manager 200 can include additional data object data, such as metadata. This additional information can also be stored in the classification data store 250.

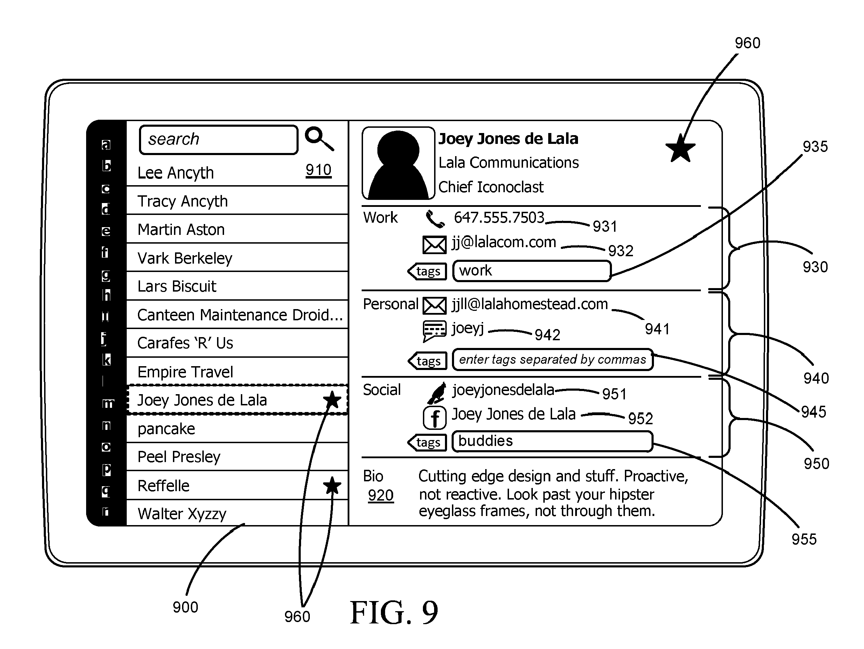

Example rules for the various rule engines 232a..n were discussed in relation to Table 1, above. FIGS. 9 to 11 illustrate possible graphical user interface views for receiving user input defining rules on the electronic device 100. User- or administrator-defined rules may be defined elsewhere, for example at a server or other computing device in communication with the electronic device 100. The defined rules or rule engine are subsequently transmitted to the electronic device 100 for registration in the rule engine repository 230 as described above.

FIG. 9 illustrates a first view 900 that may be displayed on a display screen 110 of the electronic device 100. In brief, classification rules for a rule engine can be defined using a specialized application associated with a particular type of data object executing on the device 100, such as the contacts application. This first view 900 comprises a view of a contact or address book application, including a directory of contacts 910 and a pane 920 displaying contact information for a selected one of the contacts. The contact information for the contact is stored in a contact data object at the electronic device 100. As presented in the view 900, the contact information includes commonly used identifiers such as proper name (first and last name), company name, job title, phone number, email addresses, IM address, social networking addresses and biography. Not all of these information components are required in a single contact data object. In this example, contact information is separated into "work" 930, "personal" 940 and "social" 950 type contact information. Other divisions of contact information may be used (e.g., "work" vs. "home" and "mobile"). For this particular contact, a work telephone number 931 and email address 932 are provided, as well as a personal email address 941 and IM userid 942, and social networking userids 951 and 952. The contacts application also provides for the designation of a contact as a "starred" contact, and in this example the displayed contact is also a "starred" contact as indicated by the icon 960. The directory listing of contacts 910 also includes similar icons 960, identifying "starred" contacts.

In addition to this contact information, further data entry fields 935, 945 and 955 are provided for each type of contact information (work, personal and social respectively). These data entry fields 935, 945 and 955 receive user input of one or more classification names. As shown in FIG. 9, the classification value "work" has been input in the work data entry field 935, thus associating the classification "work" with the word contact addresses 931, 932. The classification value "buddies" has been input in the social data entry field 955, associating the classification "buddies" with the social networking userids 951, 952. No classification has been input for the personal addresses of this particular contact. The content of the various data entry fields 935, 945, 955 can be edited and saved on the electronic device 100. Upon saving, rules may be configured for a rule engine by the contacts application.

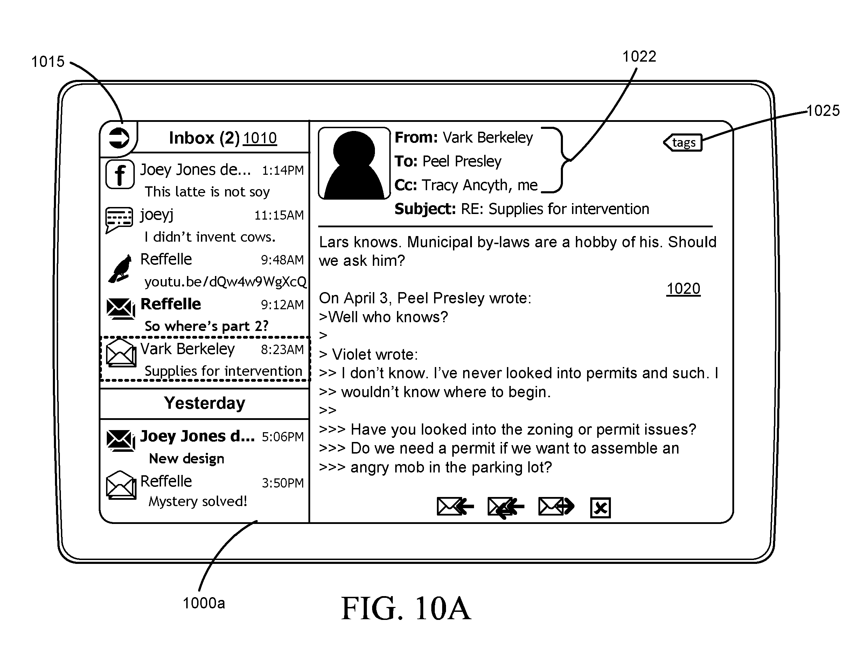

FIGS. 10A to 10C illustrate further views that may be used in association with a messaging application, such as the unified inbox application 158. This example provides for rules to be user-defined during use of the application to view messages. FIG. 10A illustrates a first view 1000a of a unified inbox application 158 displaying a message listing 1010 and a message preview pane 1020. In this example, messages of different types are included, as can be seen by the variety of message icons displayed in the message listing 1010. The listing 1010 also represents a "conversation view" or "threaded view" of messages, in that groups of related messages (e.g., email messages in a single thread) may be represented by a single entry in the message listing. The preview pane 1020 includes typical message preview content, including a display of select message header information 1022 including sender information and/or recipient information, as well as content from the message body. The preview pane 1020 also includes one or more icons or other graphical user interface elements 1025 representing tags or classifications assigned to the previewed message. One or more of these user interface elements 1025 may be actuated-for example, by "clicking" or "tapping" on the element 1025, or by otherwise selecting the element 1025 and invoking an instruction on the device 100 to launch a further process represented by the element 1025-to open a classification dialog user interface element for specifying a classification for the message, and optionally creating a rule to be applied to messages going forward.

It will be understood by those skilled in the art, however, that an explicit identification of the classifications assigned to the message is not mandatory. Rather than displaying the user interface element 1025, a menu option or other user interface element may be presented to the user to permit invocation of the classification dialog user interface element.

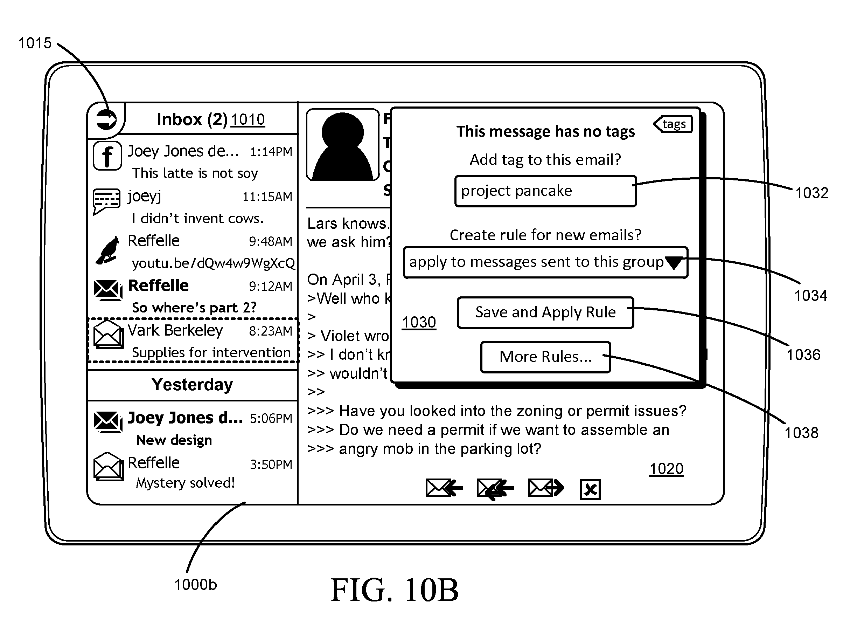

The classification dialog user interface element 1030 is displayed in a further view 1000b, shown in FIG. 10B. In this particular example, the message starts with no "tags" or classifications, as stated in the classification dialog user interface element 1030. The element 1030 thus includes further data entry fields or user interface elements 1032, 1034 to permit the user to input a classification (data entry field 1032), and to generate a rule based on the input classification (element 1034). The example shown in FIG. 10B defines specific conditions for the rule based on the currently displayed message; in this case, the condition set out in the element 1034 specifies that the input classification will apply to those emails (i.e., communication data objects of the same type as that currently displayed) having the same participant set as the current message. Further user interface elements 1036, 1038 provide options for saving the input classification and applying the new rule to the specified message type, and for accessing a further interface for defining rules, respectively.

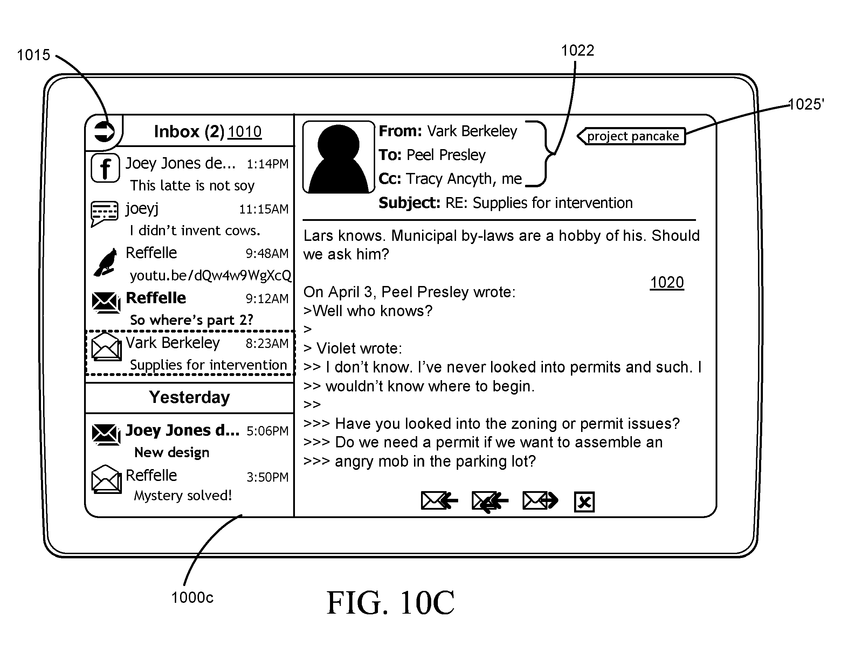

If the newly input rule (which assigns the classification "project pancake" to the message) is saved and applied, the currently displayed message will be assigned this classification value, as shown in FIG. 10C, which shows a further view 1000c in which the user interface element 1025 has been replaced with changed element 1025', now indicating that the message has been tagged with the new classification. The association of this message and the classification may be stored directly in the classification data store 250. Further, upon creation of a rule, the unified inbox application 158 or other messaging application providing these views 1000a, 1000b, 1000c then generates an associated rule engine implementing this rule, or modifies an existing rule engine to implement this rule. The new or modified rule engine is then registered or updated as necessary with the rule engine repository 230 as described above.

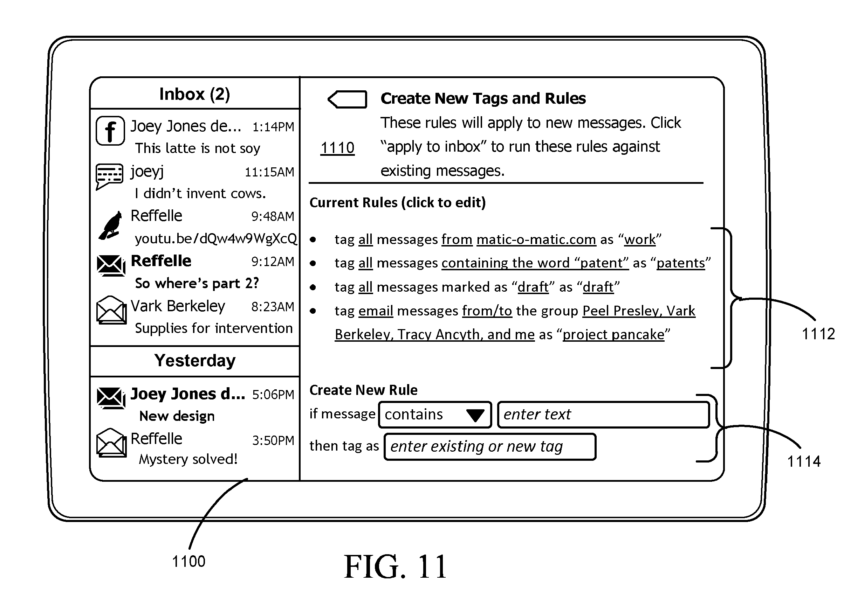

FIG. 11 illustrates still another view 1100 of the same application, but now providing a user interface 1110 listing existing rules 1112, and providing access to either edit the existing rules or to create additional rules. The existing rules 1112 are displayed using a commonly known technique of hyperlinking or otherwise highlighting configurable portions of the rules. For example, for the rule "tag all messages containing the word 'patent' as 'patents"', the terms "all", "containing the word 'patent"', and "'patents"' are underlined; the term "containing..." may be selected and edited to read, for example, "containing the word 'patent' or 'invent"'. Additional rules may be created using the user interface 1114, which includes options to generate logical statements using user-entered strings and classifications. Again, upon editing or creation of rules using the user interface 1110, the new or edited rules are stored in a corresponding rule engine, which is registered or updated as necessary with the rule engine repository 230 as described above.

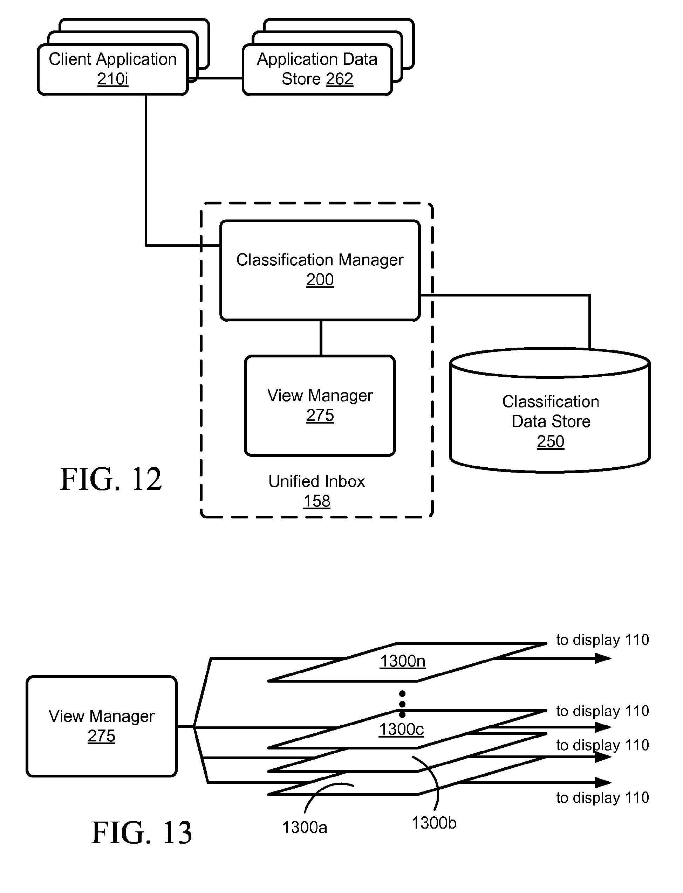

Once classification data has been added to the classification data store 250, the classification data can be extracted by queries sent to the classification manager 200 by other applications executing on the electronic device, or alternatively by the classification manager 200 issuing notifications to client applications or processes. FIG. 12 illustrates possible relationships between various modules on the electronic device 100 for extracting classification data from the classification data store 250. As before, the classification manager 200 is in communication with the classification data store 250. Various applications, such as a client application 210i, may send requests for classification data to the classification manager 200, or may receive notifications from the classification manager 200. The application is referred to as a "client" in that the classification manager 200 serves the application's classification data requests.

The client application 210i may be the same application that had previously received a data object for classification by the classification engine system, or may be an application associated with a data store 262 that had previously been accessed by a rule engine for the purpose of classifying a data object. The client application 210i may in fact have no prior relationship with the classification manager 200 at all in respect of classification of a data object. Whether the client application 210i is granted access to the classification data stored in the classification data store 250 may depend on how permissions for the classification data are configured in the classification data store 250 of the classification manager 200. In one implementation, the client application 210i transmits requests to the classification manager 200 for classification data, for example in respect of a specific data object, or in respect of a specific classification value. The classification manager 200 then constructs a query for the classification data store 250 and queries the data store 250. The response to the query is returned by the data store 250 to the classification manager 200, which then in turn provides the response to the client application 210i. In such an implementation, privacy or security may be protected at least in part by only permitting the client application 210i to request classification data for its own data objects; for example, an email application 152 may be permitted to request classification data only for email data objects, or only for email data objects associated with an account provisioned in association with that email application. The client application 210i may alternatively be required to present a key or ticket granting the application 210i authorization to access the classification manager 200'S services and/or the classification data store 250.

In another implementation, the client application 210i registers as a listener with the classification manager 200 (again, this may be subject to permissions granted to the client application 210i). As the classification manager 200 receives notifications of new classification events from a rule engine or from the classification data store 250, the classification manager 200 in turn issues a notification that is obtained by the client application 210i. The new classification event may be the addition of a record of a data object in association with a given classification in the classification data store 250, or a change to an existing record in the data store 250. The notification to the client application 210i can include data such as the data object identifier and type, and the classification assigned to the data object. Other data object information accessible to the classification manager 200 may also be included in the notification.

A particular example of a client application or process is a view manager 275, illustrated in FIG. 12. In one implementation, the view message 275 and the classification manager 200 both are integrated in a single application, such as the unified inbox application 158. In other example implementations, the classification manager 200 may be integrated with another application such as the unified inbox application 158, while the view manager 275 is distinct from the integrated application; and in still other examples, the classification manager 200 may be a separate module, while the view manager 275 is incorporated in another application. The view manager 275 manages one or more "views" of aggregated data objects grouped according to classifications defined by the classification engine system. Turning to FIG. 13, the view manager 275 may be described as a manager of a "stack" of distinct display views 1300a..1300n. The view manager 275 in this case receives incoming data from the classification manager 200 regarding newly classified or reclassified messages, and updates the appropriate view accordingly. In one implementation, the views managed by the view manager 275 are data objects used to populate a graphical user interface, not shown in FIG. 13. In other implementations, the view manager manages an ordered set of screen objects; the "top" object in this ordered set, or stack, is the currently displayed screen or the most recently displayed screen of the stack, and the remainder are ordered according to which was the next most recently displayed. Each screen object thus is the product of a separate executing thread or process that maintains its content.

The views managed by the view manager 275 may be automatically defined for every classification defined in the classification data store 250. For example, as each classification is created in the classification data store 250, the classification manager 200 provides a notification to the view manager 275 of the new classification, and the view manager 275 creates a view associated with that classification. Alternatively, the views are defined in response to configuration instructions; views for only select classifications are maintained by the view manager 275. Further, in some implementations, custom views may be defined that combine classifications (for example, a single view may be a combination of the "work" and "patents" classifications, or only those "work"-classified data objects excluding "patents").

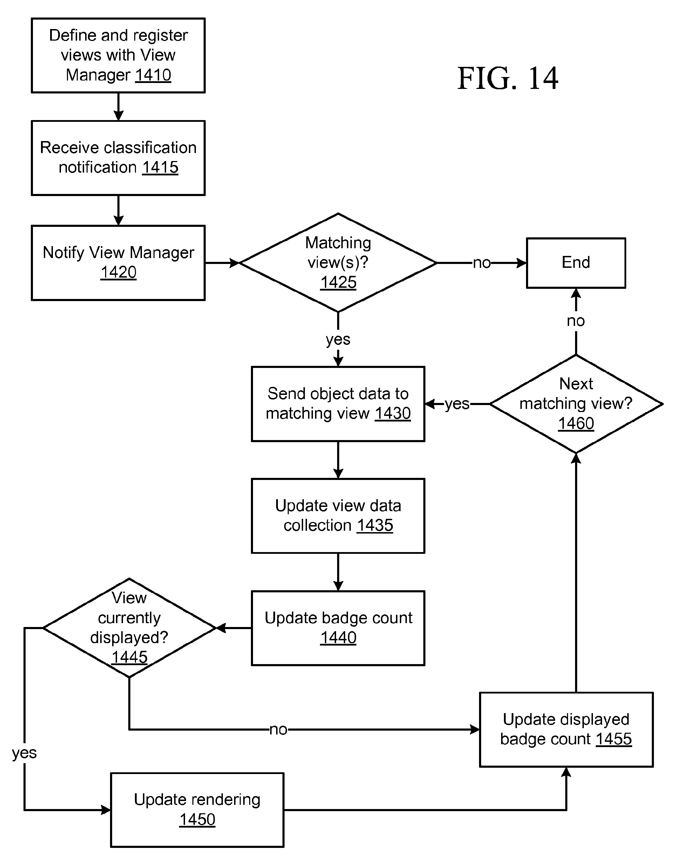

FIG. 14 illustrates an example method that may be implemented to facilitate the maintenance of views by the view manager 275. At 1410, a specific view is defined and registered with the view manager 275. As noted above, a view may be automatically defined for each classification in the classification data store 250, or may be separately configured. The view manager 275 maintains a registry of the views. At 1415, the classification manager 200 receives a notification of a new classification event from a rule engine or the classification data store 250, as described above in respect of the client application 210i. The view manager 275 in turn receives a notification at 1420 from the classification manager 200 of a new classification event for a data object. Again, as described above, the notification received by the view manager 275 can include the data object identifier, the classification associated with the data object, and optionally other data object information such as data object type.

The view manager then determines at 1425 whether it has matching views registered for the classification identified in the notification. If not, the method ends. If the view manager does have one or more matching views, then at 1430 the data object data obtained by the view manager is sent to that view. In some cases, the view manager 275 may query the appropriate data store to obtain additional data object information, such as data object content or further metadata, and all this information is provided to the view at 1430 as well. The collection of data objects associated with a given classification is then updated for that view at 1435 by adding the data object information to the existing collection of data for that view.

In some examples, the view may be associated with a "badge" count or other item count icon that reflects the total number of data objects in that view, or the number of unread objects (e.g., in the case of messages, unread messages) in the view. This count is then updated at 1440 as appropriate. In some cases, updating the count may also include verifying the status of the data object as "unopened", "unread" or "new" before incrementing the count. In other cases, when the notification provided to the view manager 275 indicates that the status of a data object has been changed from "unopened", "unread" or "new" to "opened" or "read", the count may be decremented instead.

If it is determined that the view being updated is also being current displayed, then at 1450 a rendering of that view (i.e., the graphic representation of the view that is output to the display 110) is updated to reflect the changed data in the view. Otherwise, only the displayed badge count, if applicable, is updated at 1455 in accordance with the updated badge count determined at 1440. If there are further matching views, as determined at 1460, the method repeats at 1430; otherwise, the method ends.

In this manner, listings of data objects of particular relevance can be maintained and updated at the electronic device 100, without requiring ad hoc searches of the various data stores on the device 100 whenever messages or other data objects relating to a particular category are sought. Instead, individual views representing each category of interest are stored at the device 100, and are incrementally updated as necessary when a new message (or other data object) is received and classified.

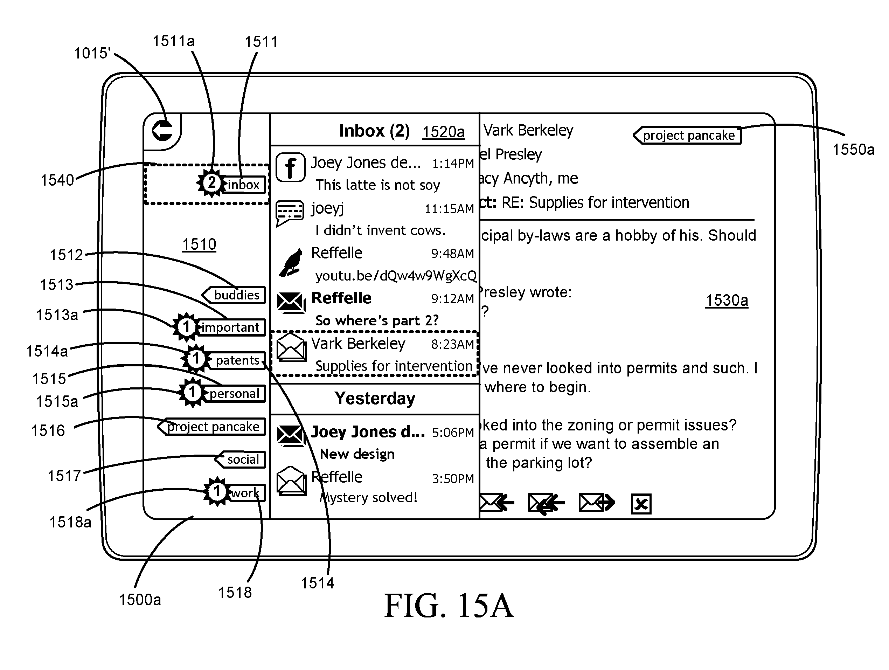

FIGS. 15A to 15E depict a sequence of screens that may be displayed at an electronic device display 110, in accordance with the operation of the view manager 275. A first view 1500a is shown in FIG. 15A. This view resembles the unified inbox view of FIG. 10A; however, in this case, the screen is divided into three display region: a classification pane 1510, a message listing 1520a, and a message preview region 1530a. The latter region 1530a may be partially obscured by one of the other regions of the screen, such as the message listing 1520a, since the display of the classification pane 1510 occupies additional space on the display 110. The classification pane 1510 may be invoked through use of a graphical user interface element 1015, which can be seen in FIG. 10A. Actuation of this element 1015, for example by a swipe gesture on a touchscreen-based device, results in the classification pane 1510 visually "sliding" into view to the position shown in FIG. 15A. The graphical user interface element 1015 of FIG. 10A has been altered to an element pointing in the other direction if FIG. 15A, thus providing a visual cue to the user on how to hide the classification pane 1510 from view. In the view 1500a, the message preview pane 1530a displays a selected message that is listed in the message listing 1520a. The display also includes a further graphical user interface element 1550a indicating a tag associated with the currently displayed message.

In the classification pane 1510, it can be seen that there are number of tags or classifications displayed in the various user interface elements 1511, 1512, 1513, 1514, 1515, 1516, 1517, and 1518. The view manager 275 therefore manages a view for each one of these classifications. As can be seen in the classification pane 1510, the first user interface element 1511 is highlighted as indicated by the highlight box 1540, and it is the message listing corresponding to this highlighted classification that is displayed in the message listing region 1520a (i.e., all messages in the inbox).

Select elements 1511, 1513, 1514, 1515 and 1518 are accompanied by corresponding message count badge icons 1511a, 1513a, 1514a, 1515a and 1518a, respectively. In this example, the message counts in these icons represent the total number of "unread", "unopened" or "new" messages for that classification. In the situation where a given data object "belongs" to multiple classifications, the inclusion of that data object in a given classification may affect the message counts for each one of the multiple classifications.

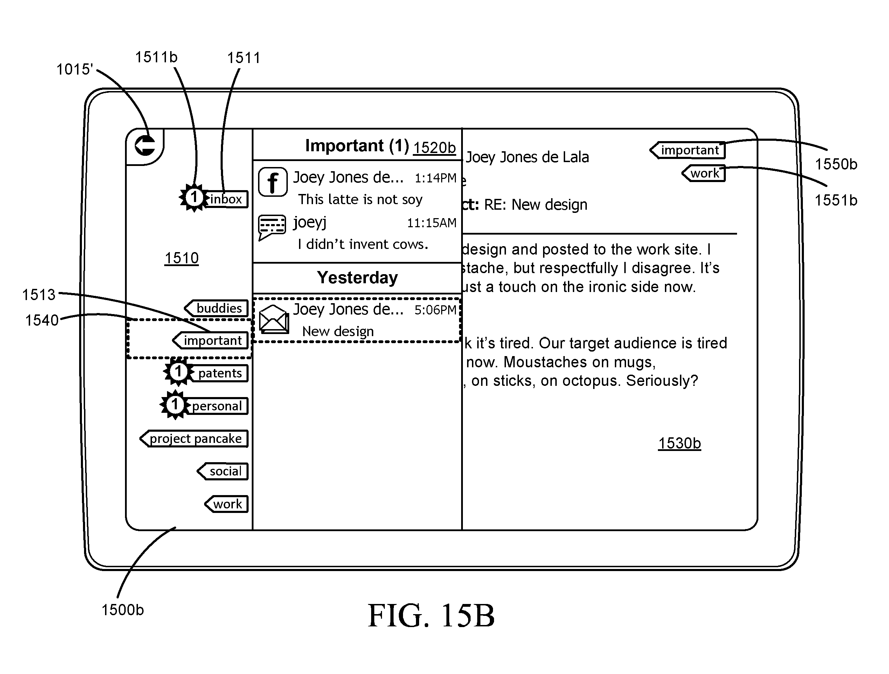

Turning to FIG. 15B, a further view 1500b is shown. This particular view may be the result of the user selecting the "important" tag user interface element 1513 in the classification pane 1510, as indicated by the position of the highlight box 1540. In this view, then, the message listing of region 1520b is now different from the view 1500a; the listing of messages includes only those messages that are associated with a "starred" contact (as seen in FIG. 9, this particular contact was marked as a "starred" contact). The message preview pane 1530b displays a portion of one of these messages, selected from the message listing shown in 1520b. In this instance, as can be seen by the user interface elements 1550b and 1551b, the message has been classified as both "important" and "work". This particular message was previously unread in FIG. 15A, but now is marked read; the message count badges 1511a, 1513a and 1518a have been updated accordingly. Message count badge 1511a, which previously indicated that there were two unread messages in the message inbox, has been updated to indicate that there is only one such message. The badges 1513a and 1518a, which previously indicated that there was one unread message for both the "important" and "work" categories, have been removed altogether, thus indicating that there are no more unread messages in these categories. In other embodiments, different visual indicators may be used to indicate a change in unread message count or total message count. The message listing 1520b represents an example of a "view" maintained by the view manager 275.

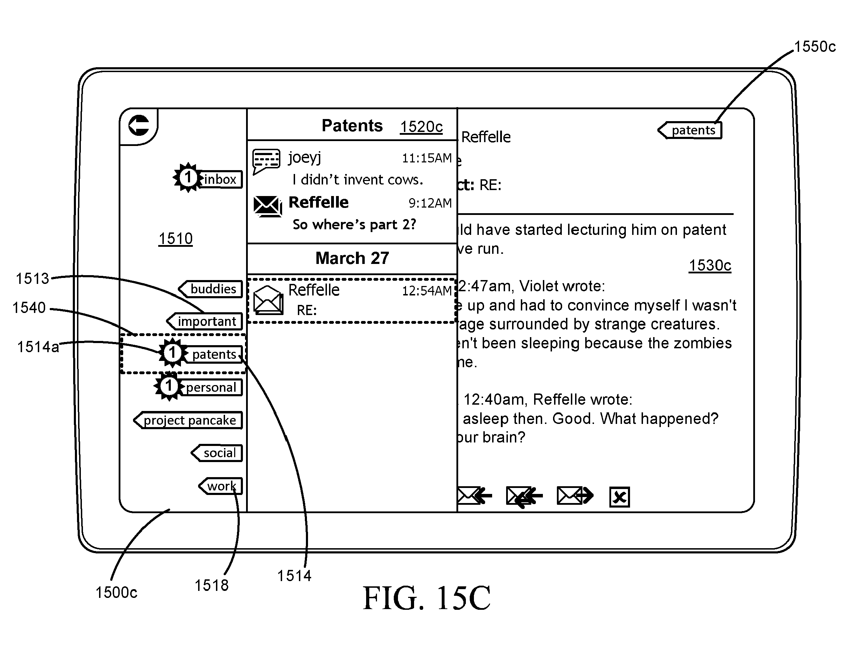

FIG. 15C illustrates a next screen 1500c that may be displayed after the previous screen 1500b. In this example, the "patents" category has been selected, as indicated by the position of the highlight box 1540. The message listing 1520c has therefore been updated to reflect a further view maintained by the view manager 275, and a different message is displayed in the preview pane 1530c. Again, it can be seen that the graphical user interface element 1550c has been modified to reflect a current classification of the message. The badge counts in the classification pane 1510 remain the same as they were in the previous screen 1500b, since no unread messages in the "patents" category have since been read. the view comprising the message listing 1520c represents another example of a view maintained by the view message 275.

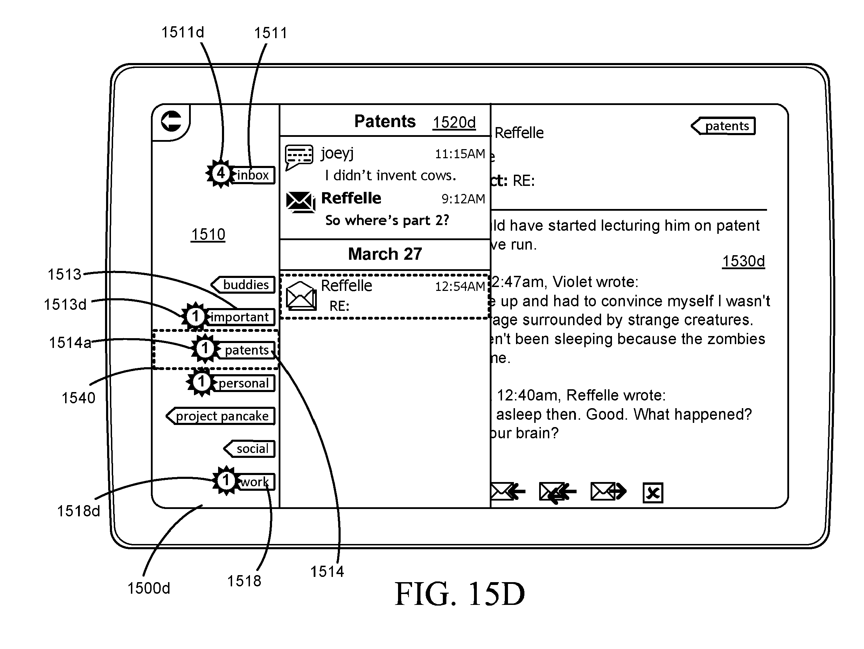

Consider the circumstance in which additional messages are received at the electronic device 100, and classified by the classification engine system, while the screen 1500c is displayed. A possible resultant screen 1500d is shown in FIG. 15D. In this case, the badge count icons 1511d, 1513d, and 1518d have been updated to reflect the receipt of three new messages (hence the increase indicated in the badge count icon 1511d from one to four), and of these three new messages, one new message that has been classified as "important" and one new message that has been classified as "work" (in fact, the same message may be classified as both). The view represented by the message listing 1520d, however, remains the same since no new view was selected.

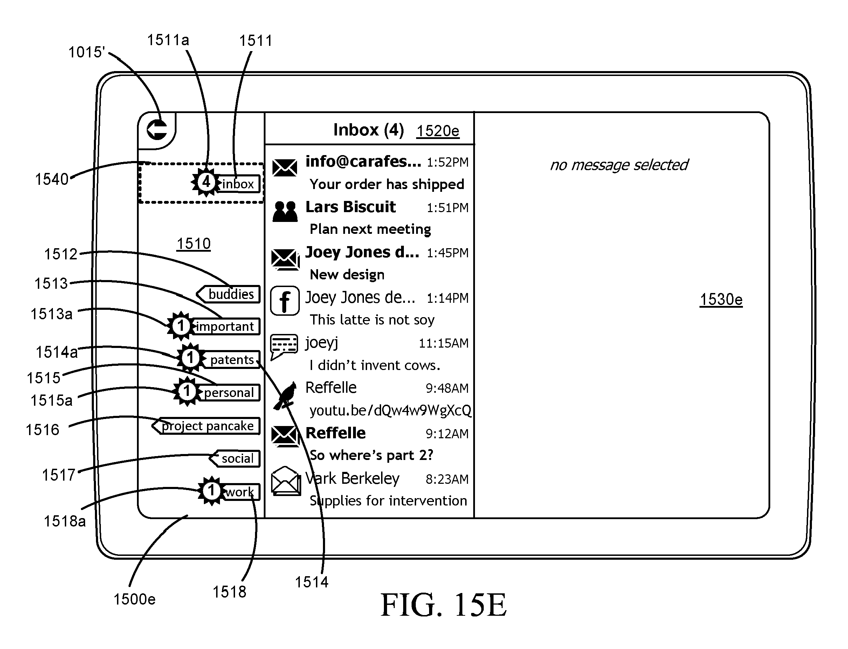

Finally, after the receipt of the new messages, the view may be switched back to the original inbox view, as indicated by the location of the highlight box 1540 in the screen 1500e of FIG. 15E. As a result, the view shown in the message listing region 1520e has been replaced with a complete inbox view showing messages associated with any categories, rather than only a specified single category. As can be seen in the region 1520e, three new messages have been added to the beginning of the message view. No message is previewed in the message preview region 1530e, however, since no message in the message listing has been selected.

The view manager 275 thus facilitates the maintenance of separate views (such as the message listings 1520a..e shown in FIGS. 15A to 15E), so that one view can easily replace another depending on what category has been selected in the classification pane 1510. As described above with reference to the flowchart of FIG. 14, the various views are simply updated with additional data object information as the list of data objects associated with that classification is updated. There is no need for a full search to be executed against the classification data store 250 or any individual message data store to identify relevant messages for a given classification whenever a particular view is to be displayed.

There is thus provided a method implemented at an electronic device, the method comprising: for a data object obtained by the electronic device, the data object having a data object type and one or more data object characteristics: identifying, from a plurality of rule engines on the electronic device, one or more rule engines corresponding to the data object based on the data object type; providing, to each of the identified one or more rule engines, data object information comprising at least an identifier for the data object; receiving at least one classification value for the data object determined by the identified one or more rule engines based on at least one of the data object characteristics; and storing the at least one classification value in association with the data object in a classification data store.

In one aspect, the method further comprises registering each of the plurality of rule engines in a rule engine repository on the electronic device, and wherein identifying one or more rule engines corresponding to the data object comprises querying the rule engine repository using the data object type.

In another aspect, the method further comprises executing each of the one or more rule engines, wherein executing comprises retrieving content of the data object from a data store and applying a rule defined in the rule engine to the retrieved content.

In still another aspect, the method further comprises: storing a plurality of views on the electronic device, each view being associated with a selected classification value and comprising a listing of data objects corresponding to the selected classification value; upon storing the classification value in the classification data store, issuing a notification; in response to the notification, determining whether any of the plurality of views is associated with the classification value determined for the data object; if any of the plurality of views is so associated, updating the listing of data objects comprised in that view to include the data object; and storing the view thus updated.

In yet another aspect, the method further comprises: if one of the plurality of views associated with the classification value determined for the data object is currently displayed on the electronic device when the listing of data objects for that displayed one of the plurality of views is updated, updating the display of that displayed one of the plurality of views.

There is also provided a method, comprising: storing at least one rule engine on a mobile communication device, the at least one rule engine corresponding to a communication data object type; storing a plurality of views on the mobile communication device, each view being associated with a selected classification value and comprising a listing of communication data objects corresponding to the selected classification value; receiving, by the mobile communication device, a communication data object, the communication data object having a communication data object type and one or more communication data object characteristics; storing the communication data object in association with an identifier in a communication data store on the mobile communication device; notifying a classification manager executing on the mobile communication device of the communication data object type and associated identifier; the classification manager, once notified: obtaining an identification of any of the at least one rule engine corresponding to the communication data object type; sending, to each identified rule engine, information for the communication data object comprising at least the identifier; receiving, in a classification data store on the mobile communication device, at least one classification value associated with the communication data object, the at least one classification value being determined by at least one identified rule engine based on at least one of the one or more communication data object characteristics; upon receiving the at least one classification value, notifying a view manager executing on the mobile communication device of the identifier and the at least one classification value; and the view manager, once notified: determining whether any of the plurality of views is associated with the at least one classification value; if any of the plurality of views is so associated, updating the listing of data objects comprised in that view to include the communication data object; and storing the view thus updated.

There is also provided an electronic device-readable medium, which may be physical or non-transitory, bearing or storing code, which when executed by a processor of the electronic device, causes the device to implement the methods described herein.

There is further provided a system and an electronic device, such as a mobile communication device, adapted to carry out the methods described herein. In particular, an electronic device may comprise at least one communication subsystem such as those described above, at least one memory device, and at least one processor adapted to implement the aforementioned methods.

The system may comprise the various features described herein, and in particular receiving means adapted to receive a plurality of data objects and a plurality of rule engines, each of the data objects having a data object type and one or more data object characteristics; at least one data store adapted to store the plurality of data objects; a rule engine repository adapted to store the plurality of rule engines and to identify one or more rule engines corresponding to a received data object, based on the data object type of the received data object; a classification manager adapted to provide, to each of the identified one or more rule engines, data object information comprising at least an identifier for the data object; and a classification data store adapted to receive at least one classification value for the data object determined by the identified one or more rule engines based on at least one of the data object characteristics. The system may also comprise a view manager adapted to maintain a plurality of views, each view being associated with a selected classification value and comprising a listing of data objects corresponding to the selected classification value, and to update the listing of data objects for a view associated with the at least one classification value determined for the data object.

It should be understood that steps and the order of the steps in the processing described herein may be altered, modified and/or augmented and still achieve the desired outcome. Throughout the specification, terms such as "may" and "can" are used interchangeably and use of any particular term should not be construed as limiting the scope or requiring experimentation to implement the claimed subject matter or embodiments described herein.

The systems' and methods' data may be stored in one or more data stores. The data stores can be of many different types of storage devices and programming constructs, such as RAM, ROM, flash memory, programming data structures, programming variables, etc. It is noted that data structures describe formats for use in organizing and storing data in databases, programs, memory, or other computer-readable media for use by a computer program.

Code adapted to provide the systems and methods described above may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. Various functional units described herein have been expressly or implicitly described as modules and agents, in order to more particularly emphasize their independent implementation and operation. It is also noted that an agent, module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The various functional units may be implemented in hardware circuits such as custom VLSI circuits or gate arrays; field-programmable gate arrays; programmable array logic; programmable logic devices; commercially available logic chips, transistors, and other such components. Modules implemented as software for execution by a processor or processors may comprise one or more physical or logical blocks of code that may be organized as one or more of objects, procedures, or functions. The modules need not be physically located together, but may comprise code stored in different locations, such as over several memory devices, capable of being logically joined for execution. Modules may also be implemented as combinations of software and hardware, such as a processor operating on a set of operational data or instructions.

A portion of the disclosure of this patent document contains material which is or may be subject to one or more of copyright, design patent, industrial design, or unregistered design protection. The rights holder has no objection to the reproduction of any such material as portrayed herein through facsimile reproduction of the patent document or patent disclosure, as it appears in the Patent and Trademark Office patent file or records, but otherwise reserves all rights whatsoever.

## Claims

1. A method implemented at an electronic device, the method comprising:
for a data object obtained by the electronic device, the data object having a data object type and one or more data object characteristics:
identifying, from a plurality of rule engines on the electronic device, one or more rule engines corresponding to the data object based on the data object type;
providing, to each of the identified one or more rule engines, data object information comprising at least an identifier for the data object;
receiving at least one classification value for the data object determined by the identified one or more rule engines based on at least one of the data object characteristics; and
storing the at least one classification value in association with the data object in a classification data store.

2. The method of claim 1, further comprising registering each of the plurality of rule engines in a rule engine repository on the electronic device, and wherein identifying one or more rule engines corresponding to the data object comprises querying the rule engine repository using the data object type.

3. The method of claim 1, wherein at least one of the plurality of rule engines comprises rules defined by input received by an application executing on the electronic device.

4. The method of claim 3, wherein the application is associated with a different data object type than the data object type of the data object.

5. The method of any one of claims 1 to 4, further comprising obtaining the data object by receiving the data object, and storing the data object in a data store on the electronic device, wherein the identifying, providing, receiving, and storing the at least one classification value are carried out upon detecting that the data object has been stored in the data store.

6. The method of claim 1, wherein the data object is stored in a data store associated with a first application provided on the electronic device.

7. The method of claim 6, wherein at least one of the one or more rule engines corresponding to the data object is associated with a second application provided on the electronic device, the second application being associated with a different data store.

8. The method of any one of claims 1 to 7, further comprising executing each of the one or more rule engines, wherein executing comprises retrieving content of the data object from a data store and applying a rule defined in the rule engine to the retrieved content.

9. The method of any one of claims 1 to 8, further comprising:
storing a plurality of views, each view being associated with a selected classification value and comprising a listing of data objects corresponding to the selected classification value;
upon storing the classification value in the classification data store, issuing a notification;
in response to the notification,
determining whether any of the plurality of views is associated with the classification value determined for the data object;
if any of the plurality of views is so associated, updating the listing of data objects comprised in that one or more of the plurality of views to include the data object; and
storing the updated one or more of the plurality of views on the electronic device.

10. The method of claim 9, further comprising:
if one of the plurality of views associated with the classification value determined for the data object is currently displayed on the electronic device when the listing of data objects for that displayed one of the plurality of views is updated, updating the display of that displayed one of the plurality of views.

11. The method of any one of claims 1 to 10, wherein the data object is a communication data object.

12. The method of claim 11, wherein the data object type is email.

13. A system implemented on an electronic device, the system comprising:
receiving means adapted to receive a plurality of data objects and a plurality of rule engines, each of the data objects having a data object type and one or more data object characteristics;
at least one data store adapted to store the plurality of data objects;
a rule engine repository adapted to store the plurality of rule engines and to identify one or more rule engines corresponding to a received data object, based on the data object type of the received data object;
a classification manager adapted to provide, to each of the identified one or more rule engines, data object information comprising at least an identifier for the data object; and
a classification data store adapted to receive at least one classification value for the data object determined by the identified one or more rule engines based on at least one of the data object characteristics.

14. The system of claim 13, further comprising a view manager adapted to maintain a plurality of views, each view being associated with a selected classification value and comprising a listing of data objects corresponding to the selected classification value, and to update the listing of data objects for a view associated with the at least one classification value determined for the data object.

15. An electronic device adapted to implement the method of any one of claims 1 to 12.
